(19) Europäisches Patentamt
European Patent Office
Office européen des brevets

(11) **EP 0 815 476 B1**

(12) **EUROPÄISCHE PATENTSCHRIFT**

(45) Veröffentlichungstag und Bekanntmachung des Hinweises auf die Patenterteilung:
**29.01.2003** **Patentblatt 2003/05**

(21) Anmeldenummer: **96907482.2**

(22) Anmeldetag: **14.03.1996**

(51) Int Cl.⁷: **G02B 5/00**, G01J 3/20, G01J 1/22, G01J 3/04, A61B 1/00, G02B 23/24

(86) Internationale Anmeldenummer:
**PCT/EP96/01115**

(87) Internationale Veröffentlichungsnummer:
**WO 96/028748 (19.09.1996 Gazette 1996/42)**

(54) **OPTISCHES SYSTEM MIT GROSSEN MESSBEREICHEN**

OPTICAL SYSTEM WITH WIDE MEASURING RANGES

SYSTEME OPTIQUE A VASTES CHAMPS DE MESURE

(84) Benannte Vertragsstaaten:
**CH DE FR GB LI**

(30) Priorität: **14.03.1995 DE 1950957**

(43) Veröffentlichungstag der Anmeldung:
**07.01.1998 Patentblatt 1998/02**

(73) Patentinhaber: **Mächler, Meinrad**
**73479 Ellwangen (DE)**

(72) Erfinder: **Mächler, Meinrad**
**73479 Ellwangen (DE)**

(74) Vertreter: **DIEHL GLAESER HILTL & PARTNER**
**Patentanwälte**
**Augustenstrasse 46**
**80333 München (DE)**

(56) Entgegenhaltungen:
**EP-A- 0 362 562**     **WO-A-92/11516**
**LU-A- 67 759**     **US-A- 3 121 798**
**US-A- 3 169 165**     **US-A- 3 843 267**
**US-A- 4 784 935**     **US-A- 5 042 915**

• **PATENT ABSTRACTS OF JAPAN vol. 010, no. 305 (P-507), 17.Oktober 1986 & JP,A,61 120023 (SHIMADZU CORP), 7.Juni 1986,**

**Beschreibung**

Die vorliegende Erfindung betrifft eine Wellenlängenselektionsvorrichtung insbesondere für Spektroskopie-, Endoskopie- und/oder Radiometriesysteme sowie die damit aufgebauten optischen Systeme für die Spektroskopie, Endoskopie und/oder Radiometrie.

Ein bekanntes spektroskopisches System, bei dem ein Spektrometer bzw. ein Simultanspektrometer verwendet ist, umfaßt üblicherweise eine Beleuchtungseinrichtung, eine Probe und ein Simultanspektrometer. Die von der Beleuchtungseinrichtung ausgesandte Strahlung durchdringt die Probe und trifft auf den Eintrittsspalt des Simultanspektrometers, das die eintreffende Strahlung spektral zerlegt und von einer Empfängereinheit detektiert. Auf diese Art und Weise läßt sich beispielsweise die Absorption der Probe in Abhängigkeit von der Frequenz der Strahlung bestimmen.

Kernpunkt eines häufig benutzten Simultanspektrometers ist die Verwendung von selbstabtastenden Diodenzeilen, welche von Snow 1975 entwickelt wurden und beispielsweise 512 Einzeldioden auf 1,27 cm Länge enthalten. Die vom Anmelder entwickelte Verwendung dieser Diodenzeilen in einem Spektrometer wird bestimmt durch die Zeilengeometrie, wobei eine Diodenbreite von 25 μm zugleich die Breite des Austrittsspalts des Spektrometers festlegt. Bei einer Abbildung mit der kleinsten Fehlerquote, d.h. 1:1, ist das auch die Breite des Eintrittsspalts. Als dispersives Element wird in einem derartigen Simultanspektrometer ein holographisch erzeugtes Konkavgitter verwendet, wodurch sich ein weiteres fokussierendes Element einsparen läßt.

Häufig wird eine dem Aufbau des Simultanspektrometers angepaßte Beleuchtungseinrichtung verwendet. Licht wird von einer möglichst punktförmigen Lichtquelle ausgestrahlt und in einen Objektraum fokussisrt. Damit das Spektrometer mit größtmöglichem Wirkungsgrad ausgenutzt werden kann, ist in der Beleuchtungseinrichtung grundsätzlich die gleiche Anordnung wie im Spektrometer gewählt, wobei an die Stelle des hochgeöffneten Hologrammgitters ein asphärischer (Ellipsoid-)Spiegel gleicher Öffnung tritt. Damit eine "vollständige Abbildung" erreicht wird, also die streng konjugierte Folge von Quellenblende-Objektivblende usw., erhält der Spiegel die Dimension des Gitters des Spektrometers. Von der Lichtquelle und dem Bild der Lichtquelle, das zugleich Eintrittsblende in das Meßgerät ist, wird verlangt, daß diese sehr klein sind. Dafür wird von der Lichtquelle L eine möglichst hohe Leuchtdichte gefordert. Diese Bedingung erfüllen beispielsweise Xenonlampen der niedrigsten Leistungsklasse von 30 bis 75 Watt bei einem Leuchtfelddurchmesser von 0,3 bis 0,5 mm. Für das Ultraviolett-Gebiet sind Deuteriumlampen mit Leuchtfelddurchmessern von 0,5 mm mit hoher Leuchtdichte und 35 Watt Leistungsaufnahme erhältlich.

Zwischen dem Lichtquellenbild und dem Eintrittsspalt des Spektrometers liegt der Objektraum, in dem eine gerichtete Beleuchtung eines Objekts bzw. einer Probe gefordert wird. Die Probe ist beispielsweise in einer Küvette angeordnet, die mit geringer Strahlenneigung gegen die optische Achse, im Idealfall telezentrische Beleuchtung, durchleuchtet wird. Um dies zu erfüllen, kann beiderseits der Probe je ein Aperturwandler angebracht sein, der aus einem koaxialen kegelförmigen Lichtleiter oder Spiegel besteht, mit einer Lichteintritts- und einer Lichtaustrittsöffnung und einer spiegelnden bzw. totalreflektierenden Innenfläche.

Ein derartiges optisches System zeichnet sich durch einen sehr guten energetischen Wirkungsgrad aus, d. h. ein großer Teil der von der Beleuchtungseinrichtung ausgesandten Strahlung trifft auf die Probe und gelangt von der Probe zum Simultanspektrometer. Weiterhin zeichnet sich ein derartiges System durch eine gute Ausnutzung der Möglichkeiten des Simultanspektrometers aus. Zum Erreichen einer hohen spektralen Auflösung benötigt das Spektrometer am Eintrittsspalt eine Strahlung mit einer sehr großen Apertur. Diese wird durch die Aperturwandler bereitgestellt.

Jedoch treten bei einem derartigen System eine Reihe von Schwierigkeiten auf, die weitere Verbesserungen wünschenswert erscheinen lassen.

Um die Möglichkeiten des Simultanspektrometers möglichst gut auszunutzen, arbeitet man mit Lichtquellen höchstmöglicher Leuchtdichte. Das sind in der Praxis bevorzugt Hochdruckbogenlampen, z.B. Xenonlampen. Diese Lampen werden durchwegs mit konstanter Leistung betrieben, so daß dadurch die höchste erreichbare Strahlungsintensität einer gewählten Anordnung festliegt. Bedingt durch den guten energetischen Wirkungsgrad kann dies zur Folge haben, daß mehr Strahlung auf die Dioden des Spektrometers fällt als diese für die Sättigung benötigen, d.h. am Anfang einer Messung ist somit möglicherweise zuviel Strahlung vorhanden. Wird nun die Absorption einer Probe mit sehr großem Absorptionskoeffizienten gemessen, trifft nur noch sehr wenig Licht auf die Dioden des Spektrometers. Dementsprechend schlecht ist das Signal/Rauschverhältnis.

Es wäre daher wünschenswert, wenn man die Intensität der verwendeten Strahlung gezielt und definiert variieren könnte.

Für diesen Zweck setzt man bisher Grau- oder Neutralgläser ein, die in festen Stufen oder als Keil einen Teil der Strahlung abblenden. Diese absorbierenden Blenden sind jedoch in der Spektroskopie und Endoskopie wenig geeignet, da sie den Strahlengang verändern sowie spektral nicht neutral sind und somit das Ergebnis einer spektralen Messung negativ beeinflussen. Weiterhin werden zum Abblenden mechanische Lochblenden zum Einstecken oder kontinuierlich einstellbare Irisblenden verwendet. Diese Blenden reduzieren jedoch die Apertur der Strahlung und damit in der Spektroskopie die spektrale Auflösung und in der Endoskopie das Gesichtsfeld.

Daneben beschreibt die US-A-3,169,165 eine Verschlußvorrichtung, die es erlaubt, eine sinusförmige Modulation einer Infrarot-Konstantlichtquelle vorzunehmen. Die Verschlußvorrichtung ist aus einer geraden Anzahl mehrerer sektorartig geschnittener Verschlußsegmente aufgebaut, die radial um eine feststehende Führungsachse angeordnet sind. Einander gegenüberliegende Verschlußsegmente sind fest an jeweils einem senkrecht zur zentralen Führungsachse angebrachten Stift befestigt, wobei jeweils ein Stift durch eine Öffnung in der zentralen Achse geführt ist. Diese Stifte werden über einen Getriebezug mit einer Antriebseinheit verbunden und von dieser in eine Rotationsbewegung versetzt, wodurch eine sinusförmige Modulation der Strahlung einer Lichtquelle durchgeführt werden kann.

Ein ähnliches Problem ergibt sich häufig auch in der Radiometrie, beispielsweise bei der Messung der Lichtstärke (Candela) einer neuen Lichtquelle.

Nach dem internationalen Einheitensystem (SI-System) ist eine Candela (cd), in einer gegebenen Richtung, die Lichtstärke einer monochromatischen Strahlungsquelle der Frequenz 540 Terahertz mit einer Strahlstärke in diese Richtung von 1/683 Watt pro Steradiant. Soll nun die Lichtstärke einer neuen Lichtquelle gemessen werden, geht man in der Praxis häufig wie folgt vor.

Ein Empfänger, beispielsweise eine Photodiode, wird mit dem Licht einer genormten Lichtquelle, beispielsweise einem schwarzen Strahler mit einer vorgebenen Temperatur, beleuchtet. Der sich dabei ergebende Ausgabewert der Empfängereinbeit, beispielsweise ein Photostrom, wird der bekannten Lichtstärke der genormten Lichtquelle zugeordnet. Im allgemeinen ist diese eine Zuordnung jedoch nicht ausreichend, um die Lichtstärke einer neuen Lichtquelle, messen zu können, denn es besteht normalerweise kein linearer Zusammenhang zwischen der auf den Empfänger treffenden Lichtstärke und dem Ausgabewert des Empfängers. Sollte beispielsweise die neue Lichtquelle eine doppelt so große Lichtstärke wie die genormte Lichtquelle aufweisen, ergäbe sich nicht notwendigerweise auch der doppelte Photostrom, da sich möglicherweise die Photodiode bereits nahe an der Sättigung befindet.

Aus diesem Grund muß der Empfänger mit dem Licht weiterer genormter Lichtquellen beleuchtet werden, um den funktionellen Zusammenhang zwischen der auf den Empfänger treffenden Lichtstärke und dem Ausgabewert des Empfängers näherungsweise bestimmen zu können. Erst mit diesen zusätzlichen Informationen kann mit dem Ausgabewert des Empfängers, der sich bei Beleuchtung mit der neuen Lichtquelle einstellt, die Lichstärke der neuen Lichtquelle berechnet werden.

Da die Bestimmung des funktionellen Zusammenhangs zwischen der auf den Empfänger treffenden Lichtstärke und dem Ausgabewert des Empfängers eine langwierige und kostspielige Angelegenheit ist, wäre es wünschenswert, wenn eine einzige Zuordnung eines Ausgabewerts des Empfängers zu der Lichtstärke einer genormten Lichtquelle ausreichen würde, die Lichtstärke der neuen Lichtquelle zu bestimmen.

Eine weitere Schwierigkeit eines spektroskopischen Systems nach dem Stand der Technik ergibt sich aus der Art der Wellenlängenselektion. Dies betrifft sowohl die Auswahl der Strahlung, die von einer Empfängereinheit detektiert wird, als auch die Auswahl der Strahlung, die auf die Probe fällt.

Die zur Detektion der Strahlung üblicherweise eingesetzten Simultanspektrometer umfassen einen Eintrittsspalt, ein holographisch erzeugtes Konkavgitter und eine lineare Photodiodenzeile. Diese Bestandteile sind beispielsweise zusammen mit einem starren Rahmen fest montiert. Eine solche dauerjustierte Anordnung ohne mechanisch bewegte Teile hat die Vorzüge der Robustheit und Zuverlässigkeit zusammen mit hoher Genauigkeit und optimalem, energetischem Wirkungsgrad.

Allerdings ist bei diesem Aufbau die Spektrenaufnahme durch die Diodenzeile eingeschränkt. Dies liegt in der Tatsache begründet, daß die Zeilenchips als Einkristalle zwangsläufig eben sein müssen, während die Fokalfläche des Konkavgitters eine Kurve, genauer gesagt ein Kreis (Rowland-Kreis), ist. Zwar gestattet die Herstellung der holographischen Konkavgitter Korrekturen in Richtung einer abschnittsweisen Ebnung der Spektren, allerdings wieder um den Preis der nichtlinearen Dispersion und erheblicher Komplikationen bei der Reproduzierbarkeit in der Fertigung. Darüber hinaus sind die Spektren wegen der sphärischen Trägerfläche des Konkavgitters mit den üblichen Bildfehlern, wie sphärische Aberration, Koma und Astigmatismus, behaftet. Wiederum gestattet die Herstellung der holographischen Konkavgitter durch gezielte Ortskorrekturen der Quellpunkte des Hologramms, Bildfehler zu reduzieren. Bei der Verwendung von ebenen Photodiodenzeilen wird jedoch ein großer Teil der Korrekturmöglichkeiten für die Spektrenebnung aufgezehrt. Außerdem ist es selbstverständlich, daß eine befriedigende Ebnung im Sinne einer Tangente oder Sekante zum Rowland-Kreis nur auf einem sehr begrenzten Abschnitt des Rowland-Kreises gelingen kann. Auf diesen Abschnitt ist das Spektrometer dann fixiert. Dies hat zur Folge, daß immer nur ein kleiner Teil des Spektrums aufgenommen und detektiert werden kann.

Die EP-A-0 362 562 beschreibt in diesem Zusammenhang einen Polychromator, bei dem die Intensitätsmessung mit einer Photodiodenzeile durchgeführt wird. Die Intensitätsverteilung mindestens zweier spektraler Bereiche wird mit Lichtleitern auf die Photodiodenzeile übertragen.

In 'Patent Abstracts of Japan', Vol. 10, No. 305 & JP-A-61-120023 wird ein Spektroskopiesystem beschrieben, bei dem mehrere Lichtleiter in der von einem Dispersionselement gebildeten spektralen Bildebene angeordnet sind. Die Lichtleiter werden gebündelt und zu einem Photoelektronenmultiplier geführt, wobei die jeweils erfaßte Wellenlänge durch Auswahl der an der entsprechenden Stelle angebrachten Faser bestimmt wird.

Die US-A-4,784,935 beschreibt eine optische Anordnung, die mindestens ein Reflexionsgitter enthält, welches durch Röntgenstrukturierung hergestellt wurde. Außerdem wird ein optisches Spektrometer beschrieben, bei dem die von dem Reflexionsgitter aufgespaltene Strahlung von Lichtleitern aufgenommen und zu einem Photodiodenarray geführt wird. Die Lichtleiterenden sind besonders geformt und so an die Form des Bildfeldes angepaßt.

Die WO-A-92/11516 beschreibt ein Spektrometer, das die durch ein Echelette-Gitter aufgespaltene Strahlung durch Lichtleiter zu einem Diodenarray-Detektor leitet. Es können mehrere Lichtleiterbündel verwendet werden, die verschiedene Wellenlängen der. Strahlung zu mehreren Diodenarrays führen.

Weiterhin tritt bei der Simultanspektrometrie empfindlicher Substanzen in der Biochemie und Photochemie das Problem auf, daß die Probe vor der spektralen Zerlegung mit der integralen Strahlung der Strahlungsquelle belastet wird. Dies hat zur Folge, daß auch Spektralbereiche (z.B. Infrarot) auf die Probe treffen, die für die eigentliche Messung uninteressant sind, aber wegen den Absorptionen in der Probe für die Probe schädlich sein können.

Um dieses Problem zu beheben, wurden bisher zwei Gitter-Rowland-Spektrometer mit gegenläufiger Dispersion hintereinander geschaltet, wobei allerdings eine Zwischenoptik zur Spektrenebnung verwendet werden mußte. Mit zwei beweglichen Spaltbacken in der mittleren Spektrenebene konnte der gewünschte Spektralbereich ausgeblendet werden, so daß am Austrittsspalt des zweiten Gitterspektrometers wieder "weißes" Licht mit genau definiertem Spektralumfang zur Verfügung stand. Jedoch ist der apparative Aufwand mit zwei Gittern und der nicht einfach zu achromatisierenden Ebnungsoptik relativ hoch, so daß diese Methode keine weite Verbreitung finden konnte.

Es wäre daher wünschenswert, wenn eine Vorrichtung zur Wellenlängenselektion bereitgestellt werden könnte, die eine simultane Messung eines Spektrums über einen großen Wellenlängenbereich und/oder eine Beleuchtung einer Probe mit einem genau definierten Spektralumfang ermöglichen würde.

Es ist daher eine Aufgabe der vorliegenden Erfindung, optische Systeme zu schaffen, die Messungen über einen großen bzw. genau definierten Wellenlängenbereich ermöglichen. Diese Aufgabe wird erfindungsgemäß durch die Bereitstellung der Wellenlängenselektionsvorrichtung gemäß dem unabhängigen Patentanspruch 1 und durch das optische System gemäß dem unabhängigen Patentanspruch 9 gelöst. Weitere vorteilhafte Ausgestaltungen, Details oder Aspekte der vorliegenden Erfindung ergeben sich aus den abhängigen Patentansprüchen, der Beschreibung und den beiliegenden Zeichnungen.

Eine Steuervorrichtung für die Spektrometrie, Endoskopie und/oder Radiometrie mit einer Strahlungseintritts- und einer Strahlungsaustrittsfläche enthält durch einen Rahmen gehaltene Steuerelemente, welche aus einer ersten Lage in eine zweite Lage so überführbar sind, daß die von der Strahlungseintrittsfläche zur Strahlungsaustrittsfläche gelangende Strahlung bei im wesentlichen konstanter Apertur der Strahlung steuerbar ist.

Durch die Verwendung dieser Steuervorrichtung in einem optischen System erhält ein Beobachter in der Endoskopie immer ein voll ausgeleuchtetes Gesichtsfeld. Mit der Betätigung der Steuervorrichtung ändert sich nur die Helligkeit, nicht aber das Gesichtsfeld oder die Lichtfarbe. Die Lichtfarbe kann jedoch durch die Steuervorrichtung gezielt verändert werden, sofern dies gewünscht ist. Bei photographischen Aufnahmen kann die Steuervorrichtung die Funktion der Vorwahlblende einer Kamera übernehmen. Dies hat den Vorteil, daß das Objekt nur mit der für die Belichtung richtigen Helligkeit beleuchtet und nicht, wie bisher, mit Strahlung (Blitz) überleuchtet wird.

Auch in der Spektrometrie ergeben sich eine Reihe von Vorteilen. Photodiodenarrays besitzen einen begrenzten Dynamikumfang von ungefähr 16 bit. Im Gegensatz zu Vervielfachern ist eine direkte Signalverstärkung nicht möglich. Wenn nun bei spektrometrischen Untersuchungen spektral oder zeitlich Absorptionsdifferenzen von zwei oder mehr Extinktionsstufen auftreten, ist die Analysegenauigkeit eines Simultanspektrometers überfordert. Mittels der Steuervorrichtung kann man jedoch Extinktionsstufen gewissermaßen zuschalten oder zurücknehmen. Somit kann man bei unveränderter spektraler Auflösung immer im Bereich der optimalen Empfindlichkeit der Photodioden arbeiten.

Vorteilhafterweise definiert der Rahmen eine Öffnung, in die sich die Steuerelemente erstrecken und es ist bevorzugt, wenn die Lage der Steuerelemente der Steuervorrichtung kontinuierlich veränderbar ist. Da die meisten Strahlengänge einen kreisförmigen Querschnitt aufweisen, ist es bevorzugt, wenn der Rahmen der Steuervorrichtung parallel zur Strahlungseintrittsfläche einen ringförmigen Querschnitt aufweist und eine kreisförmige Öffnung definiert.

Die Steuerelemente sind dann bevorzugt dünne Kreissegmente, die sich vom Rahmen in die Öffnung erstrecken und in dem Rahmen um ihre Symmetrieachse drehbar gelagert sind. Ebenso ist es vorteilhaft, wenn die Kreissegmente jeweils eine Welle aufweisen, die in Lagern, bevorzugt Gleitlagern drehbar gelagert sind.

Dabei ist es besonders bevorzugt, wenn mindestens drei Kreissegmente vorgesehen sind, die, wenn sie parallel zur Strahlungseintrittsfläche ausgerichtet sind, im wesentlichen die gesamte Öffnung der Steuervorrichtung überdecken.

Es ist nützlich, wenn die Steuerelemente mit Mitteln zur Lageveränderung verbunden sind, die bevorzugt an der Außenseite des Rahmens angeordnet sind. Bevorzugt umfassen die Mittel zur Lageveränderung Räder, die jeweils über die Welle mit dem Kreissegment verbunden sind und die Kontaktflächen aufweisen. Ebenso ist es nützlich, wenn die Mittel zur Lageveränderung ein Stirnrad umfassen, das bevorzugt an der Außenseite des Rahmens rotierbar angeordnet ist und mit den Rädern über eine Kontaktfläche in Berührung steht.

Weiterhin ist es bevorzugt, wenn die Kontaktfläche des Stirnrades so geneigt ist, daß die Verlängerung der Kontaktfläche ohne Versatz auf den Schnittpunkt der Mittelachsen des Stirnrades und der Symmetrieachse der Kreissegmente gerichtet ist.

Durch diese Wahl der Neigung der Kontaktfläche des Stirnrades kann ein Schlupf zwischen dem Stirnrad und den Rädern der Steuerelemente weitgehend vermieden werden. Somit ist sichergestellt, daß sich bei der Lageveränderung der Steuerelemente eine gute Reproduzierbarkeit der einzelnen Einstellungen ergibt. Diese gute Reproduzierbarkeit ist auch nicht davon abhängig, ob zwischen den Rädern der Steuerelemente und dem Stirnrad ein Punkt- oder Linienkontakt besteht. Auch Variationen in der radialen Anordnung der Räder auf den Wellen der Steuerelemente wirken sich nicht nachteilig aus, solange nur ein Kontakt zwischen den Rädern und dem Stirnrad besteht.

Weiterhin ist es bevorzugt, wenn die Räder der Steuerelemente als Kegelräder ausgebildet und die Kontaktflächen der Kegelräder entsprechend der Kontaktfläche des Stirnrades geneigt sind

Dabei können die Kontaktfläche des Stirnrades und die Kontaktflächen der Räder glatt bearbeitet, insbesondere geschliffen sein, so daß sich eine nahezu unendliche Auflösung ergibt. Zur Vermeidung von Schlupf ist es ebenfalls bevorzugt, wenn zwischen dem Stirnrad und den Rädern ein permanentmagnetischer Schluß vorgesehen ist.

Zum Antrieb des Stirnrades ist bevorzugt ein Schneckenantrieb vorgesehen, wodurch sich die Einstellung der Steuervorrichtung nahezu beliebig feinfühlig gestalten läßt. Bevorzugt wird der Schneckenantrieb von einem Rechner gesteuert, so daß sich die kompliziertesten Regelaufgaben realisieren lassen.

Bei einer bevorzugten Ausführungsform sind die Steuerelemente aus Metall hergestellt und bevorzugt mit einem Korrosionsschutz beschichtet. Dadurch ist eine vollkommen wellenlängenunabhängige Steuerung der Intensität der verwendeten Strahlung gewährleistet.

In manchen Situationen ist jedoch eine gezielte Beeinflussung eines bestimmten Teils des Spektrums gewünscht. Dann ist es sinnvoll, wenn die Steuerelemente aus einem Material hergestellt sind, das einen vorgegebenen Teil des Spektrums der Strahlung absorbiert und/oder reflektiert. Die Steuervorrichtung wirkt dann in der Art eines Mosaikfilters.

Die vorliegende Erfindung stellt eine Wellenlängenselektionsvorrichtung bereit, die wenigstens ein Dispersionselement zur spektralen Aufspaltung der durch wenigstens einen Eintrittsspalt auf das Dispersionselement fallenden Strahlung und wenigstens ein Lichtleiterbündel aus mehreren Lichtleitern aufweist, wobei das Dispersionselement und/oder ein Fokussierelement die spektral aufgespaltene Strahlung auf eine Fokalfläche fokussiert und das Lichtleiterbündel einen vorgegebenen Bereich der spektral aufgespaltenen Strahlung in der Fokalfläche aufnimmt.

Das Lichtleiterbündel weist eine im wesentlichen ununterbrochene Stirnfläche auf, wobei bevorzugt die Stirnfläche des Lichtleiterbündels an die Fokalfläche angepaßt ist. Die von dem Lichtleiterbündel aufgenommene Strahlung wird so aus der Austrittsfläche des Lichtleiterbündels wieder auf das Dispersionselement geführt, daß an einem Austrittsspalt der Wellenlängenselektionsvorrichtung eine Strahlung erzeugt wird, die einen vorgegebenen Spektralbereich aufweist, wobei die Konfiguration der die Strahlung abstrahlenden Enden der Lichtleiter symmetrisch zu der Konfiguration der die Strahlung aufnehmenden Enden der Lichtleiter gewählt ist.

Wie bereits erwähnt, liegen die Spektren, die von Dispersionselementen bzw. zusätzlichen Fokussierelementen erzeugt werden, auf Fokalflächen oder Fokalkurven. Erfindungsgemäß wird das Spektrum nun nicht direkt benutzt, beispielsweise auf die Empfängereinheit abgebildet, sondern ein vorgegebener Bereich der spektral aufgespaltenen Strahlung wird von einem oder mehreren Lichtleitern aufgenommen und beispielsweise weiter zur Probe oder zur Empfängereinheit geführt.

Dadurch können nun sehr große Abschnitte des Spektrums ausgewählt und beispielsweise detektiert werden, da sich oder die Lichtleiter der Fokalfläche leicht anpassen können. Ebenso kann auf eine Ebnung des Spektrums ganz verzichtet werden. Die erfindungsgemäße Anordnung besitzt weiterhin den Vorteil, daß störendes Streulicht fast vollständig ausgeschaltet werden kann. So nimmt ein Photodiodenelement auf einer Diodenzeile Licht aus dem gesamten Halbraum vor seiner Empfängerfläche auf und integriert damit über das gesamte Streulicht in einem Spektrometer, das unter anderem von den Wandreflexen der verschiedenen Spektralordnungen herrührt. Ein Lichtleiter kann nur Strahlung aus einem bestimmten Raumwinkel aufnehmen und übertragen. Das ist bei derzeitigen, gebräuchlichen UV-Lichtleitern ein Winkel von etwa 26°. Auf etwa diesen Winkel oder einen kleineren Winkel sind die Aperturen der Spektrometer abgestimmt. Die Lichtleiter können daher nur das auf sie gerichtete Nutzlicht aufnehmen und sind für jede Strahlung aus anderen Winkelbereichen blind. Dieser Gewinn der Falschlichtausschaltung überwiegt bei weitem den Verlust, der durch die zusätzlichen Übertragungsverluste entsteht.

Die erfindungsgemäße Wellenlängenselektionsvorrichtung besitzt weiter den Vorteil, daß der begrenzte Raum innerhalb eines Spektrometers besser ausgenützt wird. Die eigentliche Empfängerfläche der Diodenzeile ist zentraler Teil eines hochintegrierten Schaltkreises. Dieser hochintegrierte Schaltkreis ist viel größer als die Empfängerfläche selbst, d.h. Spektralbereiche, die unmittelbar an das Zeilenareal anschließen, sind verloren. Die gravierendste Folge dieser Einschränkung herkömmlicher Spektrometer ist die Unmöglichkeit, mit kleinen Aufspaltwinkeln im Spektrometer zu arbeiten. Eine weitere Folge der relativ großen Bauvolumina der Empfänger im bevorzugt sehr kleinen und kompakten Spektrometer ist das Problem der Unterbringung von Kühlvorrichtungen, beispielsweise für Diodenzeilen, oder das Vorschalten von Bildverstärkern, z.B. Kanalplatten, die in vielen Fällen bei der Untersuchung energieschwacher Ereignisse gefordert werden. Durch die erfindungsgemäße Wellenlängenselektionsvorrichtung erhält man eine große Freiheit für die Unterbringung der Empfängereinheit, da diese jetzt nicht in der Nähe der Fokalflächen angeordnet werden muß. Auch für die Wartung oder den Austausch der Empfängereinheit ergeben sich somit große Vorteile.

Auch wenn die erfindungsgemäße Wellenlängenselektionsvorrichtung in Form eines Monochromators bzw. Polychromators vor der zu untersuchenden Probe angeordnet ist, ergeben sich eine Reihe von Vorteilen. Durch die erfindungsgemäße Wellenlängenselektionsvorrichtung läßt sich ohne großen apparativen Aufwand Strahlung mit genau definiertem Spektralumfang erzeugen. Untersuchungen an hoch empfindlichen Proben, wie sie bisher nur großen wissenschaftlichen Projekten vorbehalten waren, lassen sich nun einfach und kostengünstig durchführen.

Damit die Strahlung mit einem guten Wirkungsgrad in den Lichtleiter eintritt und der Anteil des Streulichts wirksam unterdrückt wird, ist es bevorzugt, wenn das in der Fokalfläche angeordnete Ende des Lichtleiters auf das Dispersionselement oder entgegen dem Mittelpunktsstrahl des jeweiligen reellen Bildes des Eintrittsspalts ausgerichtet ist.

Weiter ist es bevorzugt, wenn mehrere Lichtleiter als geordnet geführte Lichtleiterbündel vorgesehen sind. Dabei ist bevorzugt, wenn die im wesentlichen ununterbrochene Stirnfläche des Lichtleiterbündels an die Fokalfläche des Spektrometers angepaßt ist. Auch in dieser Situation ist es bevorzugt, wenn die in der Fokalfläche angeordneten Enden der Lichtleiter jeweils einzeln auf das Dispersionselement oder entgegen dem Mittelpunktsstrahl des jeweiligen reellen Bildes des Eintrittsspalts ausgerichtet sind. Dies kann zwar, je nach der Lage des Lichtleiterbündels auf der Fokalfläche, dazu führen, daß zwischen benachbarten Lichtleiterenden ein Winkel auftritt oder daß die Lichtleiterenden stufenweise versetzt angeordenet werden müßen, eine solche Konfiguration ist aber aus energetischen Gründen und aus Gründen der Streulichtunterdrückung bevorzugt.

Weiterhin ist es nützlich, wenn der Lichtleiter entlang der Fokalfläche bewegbar ist. Die Kontur der Führungsbahnen auf der Pokalfläche für eine Fassung der Lichtleiter oder Lichtleiterbündel wird zweckmäßigerweise asymmetrisch, damit die Fassungen formschlüssig und unverwechselbar eingesetzt werden können. Zweckmäßigerweise wird außerdem die Führungsbahn in Teilabschnitten kodiert werden, um bestimmte Positionen sicher reproduzieren zu können. Diese Codierung kann mechanisch durch eine Rasterung, optisch oder elektronisch, beispielsweise durch Magnetstreifen, ausgeführt sein.

Weiterhin ist es bevorzugt, wenn der Durchmesser der Fasern des Lichtleiters entsprechend der rechnerischen Auflösung in der Fokalfläche gewählt ist, aus energetischen Gründen jedoch nicht unter 25 µm.

Wird eine Strahlung mit genau definiertem Spektralumfang benötigt, so ist es sinnvoll, wenn das Lichtleiterbündel an der Stelle in der Fokalkurve angeordnet ist, an der der gewünschte Teil des Spektrums vorliegt und das Lichtleiterbündel die aufgenommene Strahlung so wieder auf das Dispersionselement führt, daß durch die negative Dispersion an einem Austrittsspalt der Wellenlängenselektionsvorrichtung eine Strahlung mit genau definiertem Spektralumfang erzeugbar ist.

Dazu ist es bevorzugt, wenn die Lichtleiter die in der Fokalfläche aufgenommene Strahlung wieder in die Fokalfläche führen, jedoch an einen von dem Ort der Strahlungsaufnahme beabstandeten Bereich der Fokalfläche. Von dort wird die Strahlung zurück in Richtung auf das Dispersionselement abgestrahlt.

Wird eine Strahlung mit genau definiertem Spektralumfang aber im wesentlichem unveränderter Geometrie und Apertur benötigt, ist es bevorzugt, wenn die Lichtleiter des Lichtleiterbündels die in der Fokalfläche aufgenommene Strahlung so wieder in die Fokalfläche führen, daß die Konfiguration der die Strahlung aufnehmenden Lichtleiterenden zu der Konfiguration der die Strahlung abstrahlenden Lichtleiterenden spiegelsymmetrisch ist.

Weiterhin ist bevorzugt, wenn vor der die Strahlung aufnehmenden Stirnfläche des Lichterleiterbündels Masken oder Blenden angeordnet sind, die bevorzugt verschiebbar sind. So lassen sich auf einfache Weise nachträglich die gewünschten Spektralbereiche auswählen, ohne die Konfiguration der Lichtleiter selbst verändert werden muß.

Damit ein laserartiges Strahlenbündel mit einem genau definierten Spektralbereich erzeugt werden kann, ist es bevorzugt, wenn die am Austrittsspalt erzeugte Strahlung einem Aperturwandler zuführbar ist, der einen koaxialen, kegelförmigen Lichtleiter oder Spiegel mit einer Lichteintritts- und einer Lichtaustrittsöffnung aufweist. Wird beispielsweise die erfindungsgemäße Wellenlängenselektionsvorrichtung in Verbindung mit einer starken Xenonlampe eingesetzt und ordnet man das Lichtleiterbündel in der Wellenlängenselektionsvorrichtung so an, daß der UV-Bereich (um 200 nm) des Lichts aufgenommen wird, so erhält nach dem Aperturwandler einen Lichtstrahl, der im Hinblick auf die Lichtintensität durchaus mit einem gebräuchlichen Excimer-Laser konkurrien kann jedoch erheblich billiger herzustellen ist.

Bei einer bevorzugten Ausführungsform weist die Empfängereinheit wenigstens eine Diodenzeile auf. Weiterhin ist bevorzugt, wenn das Lichtleiterbündel aufgliedert und mehreren Diodenzeilen und/oder einer Flächenanordnung von Photodioden zuführbar ist. Auf der Empfängerseite, also vor den aktiven Flächen der Diodenzeilen oder Flächenarrays, endet das Lichtleiterbündel bevorzugt in einer Fassung mit gestreckter ebener Oberfläche, angepaßt an die Geometrie der Diodenanordnung. Die bevorzugt ebene Austrittsfläche der Lichtleiter wird nun direkt auf die lichtempfindliche Zone der Diodenanordnung aufgesetzt. Dabei wählt man die Dimensionen bevorzugt so, daß die Flächen übereinstimmen und der ausgeblendete Spektrenabschnitt gerade so lang wie die aktive Fläche der Zeile ist. Wie schon am Spektrometer wird bevorzugt auch hier ein formschlüssiger und unverwechselbarer Anschluß geschaffen. Dazu setzt man beispielsweise auf den Fassungskörper der Anordnung eine "Schlüsselloch-Maske", in welche die Lichtleiterfassung als zugehöriger Schlüssel genau paßt, so daß der optische Kontakt ohne Zugang von Streulicht optimal und reproduzierbar herstellbar ist. Auf diese Weise ist es auch möglich, auf Fenster vor dem Zeilenchip zu verzichten oder zwischen dem Lichtleiterende und der Diode weitere optische Elemente, wie Bildverstärker, einzufügen.

Bei einer weiteren bevorzugten Ausführungsform sind zwei getrennte Eintrittsspalte vorgesehen, so daß in der Fokalfläche zwei getrennte Spektren entstehen, und Lichtleiter, die jeweils wenigstens einen Teil der spektral aufgespaltenen Strahlung in der Fokalfläche aufnehmen und beispielsweise zu der Empfängereinheit führen.

Bei einer bevorzugten Ausführungsform ist das Dispersionselement ein Prisma, bevorzugt ein Féry-Prisma. Bei einer weiteren bevorzugten Ausführungsform ist das Dispersionselement ein Beugungsgitter, bevorzugt ein Konkavgitter. Bei der Verwendung eines Fery-Prismas oder eines Konkavgitters besitzt bereits das Dispersionselement selbst abbildende Eigenschaften, so daß auf weitere fokussierende Elemente verzichtet werden kann. Auf diese Weise ergeben sich kleine und kompakte Wellenlängenselektionsvorrichtungen und somit kleine und kompakte Spektrometer.

Wird ein Beugungsgitter eingesetzt, so können Sinus-Furchen, Rechteck-Furchen oder Sägezahn-Furchen verwendet werden. Dabei ist es bevorzugt, wenn das Beugungsgitter ein holographisches Beugungsgitter ist. Da durch den Einsatz der Lichtleiter eine Ebnung des Spektrums überflüssig ist, können die Korrekturmöglichkeiten, die sich aus der holographischen Erzeugung des Gitters ergeben, dazu verwendet werden, die Bildfehler, wie Koma, sphärische Aberration und Astigmatismus, zu reduzieren.

Weiterhin wird erfindungsgemäß ein optisches System für die Spektrometrie und/oder Endoskopie bereitgestellt, in welchem zumindest eine Probe mittels von einer Strahlungsquelle ausgehender Strahlung gerichtet beleuchtet und die von der Probe ausgehende Strahlung zu eine Empfängereinheit und/oder zu einer Abbildungseinrichtung geführt ist. Dieses System ist dadurch gekennzeichnet, daß zumindest eine erfindungsgemäße Wellenlängenselektionsvorrichtung vorgesehen ist.

In dem erfindungsgemäßen optischen System kann ein Lichtleiter vorgesehen sein, der die aufgenommene Strahlung zur Empfängereinheit führt. Bei der Empfängereinheit kann es sich um eine Photodiodenanordnung, bevorzugt um eine Diodenzeile, handeln.

Durch die erfindungsgemäße Wellenlängenselektionsvorrichtung läßt sich Strahlung erzeugen, die, abgestimmt auf die zu untersuchende Probe und/oder die verwendeten Photodioden, genau den richtigen Spektralumfang aufweist.

Gemäß einer bevorzugten Ausführungsform ist die Strahlungsquelle eine im wesentlichen punktförmige Strahlungsquelle hoher Leuchtdichte, welche vorzugsweise durch einen asphärischen Spiegel, vorzugsweise einen Ellipsoid-Spiegel, abgebildet ist.

Dabei ist es bevorzugt, wenn eine Steuervorrichtung wie oben beschrieben zwischen der Strahlungsquelle und ihrem Bild angeordnet ist.

Ebenso ist es bevorzugt, wenn zur optischen Energieübertragung im Objektraum zwischen der Strahlungsquelle bzw. deren Bild und der Probe und/oder zwischen der Probe und der Empfängereinheit bzw. der Abbildungseinheit ein Lichtleiter vorgesehen ist, und/oder wenn zur optischen Energieübertragung im Objektraum zwischen der Strahlungsquelle bzw. deren Bild und der Probe und/oder zwischen der Probe und der Empfängereinheit bzw. der Abbildungseinheit ein Aperturwandler vorgesehen ist, der jeweils aus einem koaxialen, kegelförmigen Lichtleiter oder Spiegel mit einer Lichteintritts- und einer Lichtaustrittsöffnung besteht, wobei die größere der Öffnungen jeweils der Probe zugekehrt ist.

Für einen guten energetischen Wirkungsgrad ist es günstig, wenn der Spiegel der Beleuchtungseinrichtung und das Dispersionselement der Wellenlängenselektionsvorrichtung die gleiche Apertur aufweisen.

Weiterhin kann unter Verwendung der oben beschriebenen Steuervorrichtung ein optisches System für die Radiometrie erhalten werden, in welchem zumindest eine Empfängereinheit, welche mit Strahlung einer Strahlungsquelle bestrahlbar ist und welche einen geeichten Arbeitspunkt aufweist, bei dem ein bestimmter Ausgabewert der Empfängereinheit einem bestimmten Wert einer zu messenden radiometrischen Größe zugeordnet ist, und zwischen der Strahlungsquelle und der Empfängereinheit im Strahlengang eine Steuervorrichtung vorgesehen ist, so daß durch Einstellen der Steuervorrichtung der Ausgabewert der Empfängereinheit mit dem bestimmten Ausgabewert an dem geeichten Arbeitspunkt der Empfängereinheit in Übereinstimmung bringbar ist.

Dieses optische System für die Radiometrie besitzt den Vorteil, daß auf die vollständige Information über den funktionellen Zusammenhang zwischen der auf den Empfänger treffenden Strahlung und dem Ausgabewert des Empfängers verzichtet werden kann und trotzdem eine zu messende radiometrische Größe über einen großen Meßbereich bestimmt werden kann. Ist nämlich bei einer Vermessung einer neuen Lichtquelle die Steuervorrichtung so eingestellt, daß der Ausgabewert der Empfängerwert mit dem bestimmten Ausgabewert am geeichten Arbeitspunkt der Empfängereinheit übereinstimmt, so läßt sich das Verhältnis von unbekannter Meßgröße zu bekanntem Normwert aus dem geometrischen Übertragungsfaktor der Steuervorrichtung bestimmen, der sich seinerseits aus der durch die Steuerelemente abgedeckten Fläche und der für den Strahlungsdurchtritt zu Verfügung stehenden Gesamtfläche des Steuerelements leicht errechnen läßt.

Wurde bereits der Arbeitspunkt der Empfängereinheit unter Verwendung einer Steuervorrichtung festgelegt, so ist der dabei benutzte Übertragungfaktor der Steuervorrichtung natürlich bei der Berechnung der zu messenden Größe zu berücksichtigen.

Die Möglichkeit, eine radiometrische Größe letztlich durch einen geometrischen Übertragungsfaktor zu bestimmen, ergibt sich aus der Beobachtung, daß für radiometrische und somit im wesentlichen energetische Messungen die Apertur der Strahlung von entscheidender Bedeutung ist. Für den weitaus größten Teil der in Naturwissenschaft und Technik verwendeten Strahlgeometrien führt eine Abblendung einer Strahlung bei im wesentlicher konstanter Apertur der Strahlung auch zu einer proportionalen Verringerung der radiometrischen Größen. Hingegen führt die Abblendung einer Strahlung, bei der sich die Apertur der Strahlung verändert, zu einer praktisch nicht vorhersehbaren Verringerung der radiometrischen Größen. Ein Rückschluß von dem geometrischen Übertragungsfaktor einer solchen Blende nach dem Stand der Technik auf die messende radiometrische Größe ist dabei nicht möglich.

Soll die spektrale Abhängigkeit radiometrische Größen einer neuen Lichtquelle untersucht werden, so ist es bevorzugt, wenn zwischen der Strahlungsquelle und der Empfängereinheit im Strahlengang eine Wellenlängenselektionsvorrichtung, insbesondere eine erfindungsgemäße Wellenlängenselektionsvorrichtung vorgesehen ist.

Weiterhin ist es bevorzugt, wenn zwischen der Strahlungsquelle und der Steuervorrichtung und/oder zwischen der Steuervorrichtung und der Empfängereinheit Mittel vorgesehen sind, die die Geometrie der Strahlung an die Geometrie der Steuervorrichtung/Empfängereinheit anpassen.

Sind neben der zu vermessenden Strahlungsquelle außerdem noch eine genormte Referenzquelle und Umschaltmittel vorgesehen, so daß selektiv entweder die Strahlung der zu vermessenden Strahlungsquelle oder die Strahlung der Referenzstrahlungsquelle zu der Empfängereinheit führbar sind, so ergibt sich eine sehr flexible Anordnung, durch die auch der Arbeitspunkt der Empfängereinheit angepaßt an den dynamischen Bereich der Empfängereinheit und die Größenverhältnisse von Referenzquelle zu neuer Strahhlungsquelle schnell und sicher ausgewählt werden kann.

Die beiliegenden Zeichnungen dienen der weiteren Erläuterung der Erfindung. Es zeigen:

Fig. 1    eine Aufsicht auf eine Steuervorrichtung;

Fig. 2    die Steuervorrichtung aus Fig. 1 im Querschnitt;

Fig. 3    in schematischer Darstellung die erfindungsgemäße Wellenlängenselektionsvorrichtung in Rowland-Anordnung;

Fig. 4    die erfindungsgemäße Wellenlängenselektionsvorrichtung für die Erzeugung von Zweistrahlspektren;

Fig. 5a und 5b    Konfigurationen der Lichtleiter für die erfindungsgemäße Wellenlängenselektionsvorrichtung aus Fig. 4;

Fig. 6a und 6b    aufgespaltene Lichtleiter, die beliebig lange Spektrenaufnahmen zulassen;

Fig. 7    die erfindungsgemäße Wellenlängenselektionsvorrichtung für die Erzeugung von Strahlung mit genau definiertem Spektralumfang;

Fig. 8    in schematisierter Darstellung der wesentliche Teil eines endoskopischen Systems;

Fig. 9 bis 11    in schematisierter Darstellung verschiedene spektroskopische Systeme; und

Fig. 12 bis 14    in schematisierter Darstellung verschiedene radiometrische Systeme.

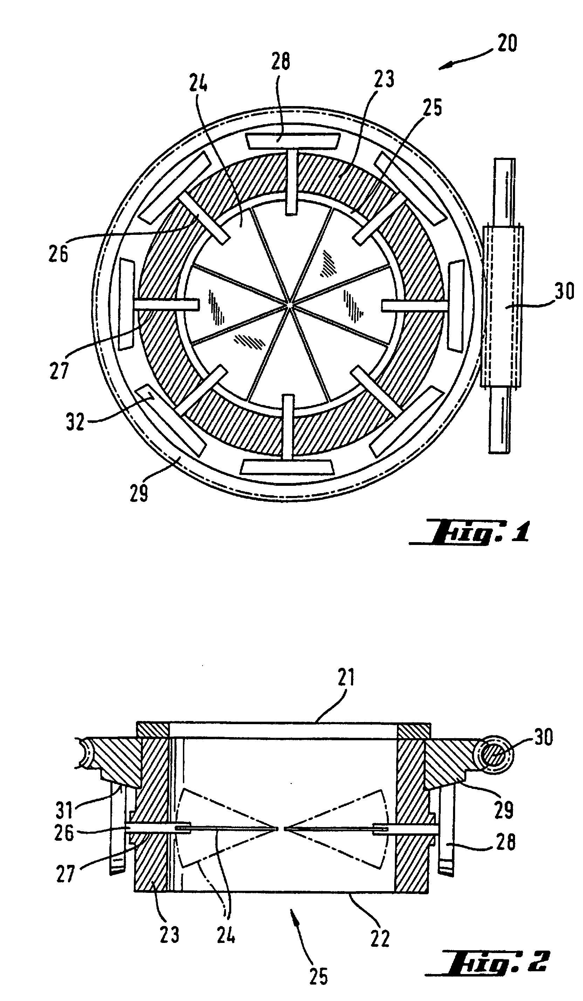

Fig. 1 zeigt eine Aufsicht auf eine Steuervorrichtung 20. Die Steuervorrichtung 20 besitzt einen ringförmigen Rahmen 23, der eine kreisförmige Öffnung 25 definiert. In dem Rahmen 23 sind Gleitlager 27 vorgesehen, die die Wellen 26 der Kreissegmente 24 aufnehmen. Die um ihre Symmetrieachse drehbar gelagerten Kreissegmente 24 wirken als Steuerelemente, welche durch ihre Winkellage die Intensität der durch die Öffnung 25 tretenden Strahlung sehr feinfühlig über den gesamten Intensitätsbereich kontinuierlich steuern.

Anhand von Fig.1 läßt sich leicht erkennen, daß die dargestellte Steuervorrichtung 20 eine Strahlung, die Steuervorrichtung 20 zentriert durchsetzt, bei im wesentlichen konstanter Apertur der Strahlung steuert. Die in Fig. 1 dargestellte Öffnung 25 ist zentrisch symmetrisch. Durch eine Veränderung der Einstellung der Kreissegmente 24 wird die Steuervorrichtung von dem in Fig. 1 gezeigten geschlossenen Zustand in einen beliebigen geöffneten Zustand überführt. Dabei wird bei jedem geöffneten Zustand nicht nur Strahlung im Zentrum der Steuervorrichtung 20, sondern auch Randstrahlung in der Nähe des Rahmens 23 durchgelassen.

Dies steht im Gegensatz zu einer Irisblende, bei der, im Vorgang des Öffnens der Blende, zuerst nur die zentralen Strahlen durchgelassen und die Randstrahlen weiter abgeblendet werden. Eine Irisblende erhält somit nicht die Apertur der abgeblendeten Strahlung.

Darüber hinaus weist die Steuervorrichtung weitere Vorteile auf. Betrachtet man das Verhältnis von freier Fläche zu von den Kreissegmenten abgedeckter Fläche für einen Ringbereich der Öffnung 25 mit festen Abstand vom Zentrum, so erkennt man, daß dieses Verhältnis unabbhängig vom Abstand des Ringbereichs vom Zentrum ist. Die Steuervorrichtung 20 gibt in jeder Stellung der Kreissegmente 24 den exakt gleichen Umfangsanteil frei, wobei die Öffnungscharakteristik mit einer Sinusfunktion einfach beschrieben werden kann. Dies ist für die photometrische Auswertung leicht darstellbar.

Weiterhin findet bei einer zentrierten Beleuchtung der Steuervorrichtung 20 keine Verschiebung des "Schwerpunkts" der Strahlung statt. Ein kreisförmiger Strahl erhält nach Durchgang durch die Steuervorrichtung zwar einen sternförmigen Querschnitt. Der Mittelpunkt dieses Stern entspricht jedoch weiterhin dem Mittelpunkt des ursprünglichen kreisförmigen Strahls.

Zur Einstellung der Lage der Kreissegmente 24 dienen die Mittel 28, 29, 30 zur Lageveränderung, welche die Kegelräder 28, das Stirnrad 29 und den Schneckenantrieb 30 umfassen.

Die Funktion der Mittel 28, 29, 30 zur Lageveränderung wird im folgenden mit Bezug auf Fig. 2 beschrieben. Fig. 2 zeigt einen Querschnitt durch eine Steuervorrichtung. Der Rahmen 23 weist Gleitlager 27 auf, in welchen die Wellen 26 der Kreissegmente drehbar gelagert sind. Durch den Einstellwinkel der Kreissegmente 24 wird die Intensität der Strahlung gesteuert, welche von der Steuervorrichtung von der Eintrittsebene 21 zur Austrittsebene 22 übertragen wird. Zur Lageveränderung der Kreissegmente 24 sind die Wellen 26 mit Kegelrädern 28 an der Außenseite des Rahmens 23 verbunden. Die Kegelräder 28 besitzen Kontaktflächen 32, die mit einer Kontaktfläche 31 des Stirnrades 29 in Berührung stehen. Damit man gewissermaßen eine unendlich genaue Winkeleinstellung der Kreissegmente 24 erhalten kann, sind die Kontaktflächen 32 der Kegelräder 28 nicht verzahnt, sondern glatt bearbeitet. Um einen Schlupf zwischen den Kontaktflächen des Stirnrades und der Kegelräder zu verhindern, weisen die Kontaktflächen 31, 32 eine Neigung auf, die so gewählt ist, daß eine Verlängerung der Kontaktflächen zum Zentrum der Öffnung 25 hin ohne Versatz auf den Schnittpunkt der Mittelachse des Stirnrades und den Symmetrieachsen der Kreissegmente gerichtet ist. Um die Gefahr eines Schlupfes zusätzlich zu verringern, ist permanentmagnetischer Schluß zwischen den Kegelrädern und dem Stirnrad vorgesehen. Dies wird am einfachsten dadurch erreicht, daß in die Kegelräder kleine Permanentmagnete (nicht gezeigt) eingesetzt sind und das Stirnrad 29 aus ferromagnetischem Material hergestellt ist.

Das Stirnrad 29 seinerseits wird durch den Schneckenantrieb 30 angetrieben. Durch die Kombination eines Schneckenantriebes mit einem Stirnrad und damit verbundenen Kegelrädern lassen sich alle Kreissegmente 24 in gleicher Weise gleichzeitig und reproduzierbar mit hoher Genauigkeit in ihrer Lage verändern. Die Feinfühligkeit und Reproduzierbarkeit der Einstellung entspricht dabei höchsten Anforderungen. Da die Kreissegmente 24 in den Lagern 27 voll durchdrehbar sind, können sie in jede beliebige Winkelstellung gebracht werden. Auch Mehrfachumdrehungen sind ohne Schwierigkeiten möglich. Soll eine vollständige Abdunkelung der Steuervorrichtung erzielt werden, so können die Kreissegmente auch so ausgelegt werden, daß sie sich bei geschlossenemm Zustand etwas überlappen. Mehrfachumdrehungen sind dann nicht mehr möglich. Der Schneckenantrieb 30 wird manuell oder von einem Rechner (nicht gezeigt) gesteuert, so daß sich beliebig komplizierte Regelaufgaben realisieren lassen.

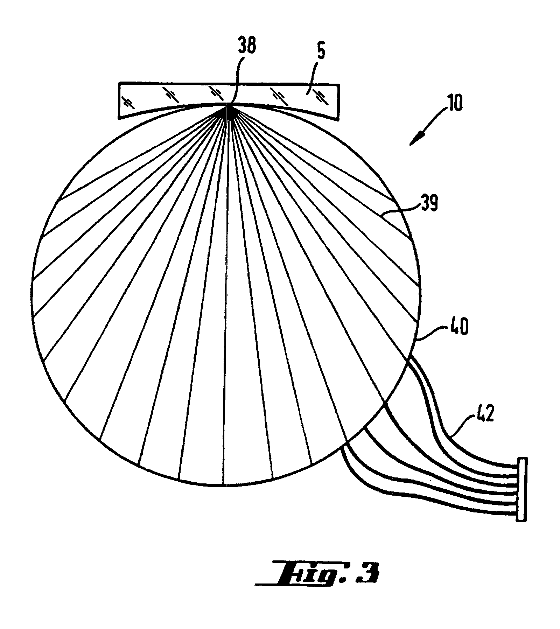

Fig. 3 zeigt in schematischer Darstellung eine erfindungsgemäße Wellenlängenselektionsvorrichtung 10 in Rowland-Anordnung. Im Scheitelpunkt 38 des Kreises 40 liegt das mit dem doppelten Radius flache, gekrümmte, konkave Beugungsgitter 5 an. Die von diesem Punkt fächerförmig ausgehenden Linien 39 zum Umfang des Rowland-Kreises 40 sind Zentralstrahlen möglicher Ein- und Austrittsbündel. Die konjugierten Orte von Eintrittsspalt und Spektrum liegen auf dem Kreisbogen. Die zugehörigen Aufspaltwinkel ergeben sich aus der Einfallsrichtung und der Gitterkonstante (Furchdichte) des Beugungsgitters 5. Weil der Eintrittsspalt 3 der Wellenlängenselektionsvorrichtung 10 bevorzugt durch Lichtleitfasern aus Quarz gebildet wird, ergibt sich die Öffnung der Bündel zu etwa 26°, was einer numerischen Apertur von 0,22 entspricht.

Das gesuchte Spektrum liegt ebenfalls auf dem Kreis 40 und wird dort von Lichtleitern 42 aufgenommen, die von einer bogenförmigen Fassung (nicht gezeigt) gehalten sind. Die Lichtleiter 42 sind dabei zu einem Lichtleiterbündel zusammengefaßt, das eine ununterbrochene (kontinuierliche) Stirnfläche aufweist. Die Form dieser Stirnfläche ist der Fokalfläche (im diesem Fall dem Rowland-Kreis) angepaßt, d.h. die Enden der einzelnen Lichtleiter sind in der Fokalfläche angeordnet. Somit ist es möglich, daß ein großer, kontinuierlicher Bereich des Spektrums von den Lichtleiter 42 aufgenommen werden kann. Durch die Anpassung der Stirnfläche des Lichtleiterbündels an die Fokalfläche kann auf teilweise Ebnung der Fokalfläche vollständig verzichtet werden.

Um zu gewährleisten, daß die spektral aufgespaltene Strahlung mit einem guten energetischen Wirkungsgrad von den Lichtleitern aufgenommen wird, sind die in der Fokalfläche angeordneten Enden der Lichtleiter jeweils einzeln entgegen den jeweiligen Zentralstrahlen des Eintrittspalts ausgerichtet. Durch das Dispersionselement entstehen, nach Wellenlängen geordnet, unendlich viele Abbildungen der Eintrittsspalts in der Fokalfläche. Jede dieser Abbildungen besitzt einen Zentralstrahl, in dessen Richtung der Hauptteil der Energie des jeweiligen Spektalanteils (in der jeweiligen Ordnung) transportiert wird. Durch die genannte Ausrichtung der Lichtleiterenden bilden die in der Fokalfläche angeordneten Enden der Lichtleiter eine Verlängerung der jeweiligen Zentralstrahlen.

Eine derartige Anordnung der Lichtleiter läßt sich beispielsweise wie folgt herstellen. Die Lichtleiter des Lichtleiterbündels werden "gekämmt" und das Lichtleiterbündel wird als Ganzes auf einen gewählten Zentralstrahl ausgerichtet. Diese Konfiguration der Lichtleiter wird fixiert und eine Formungsfolie wird auf die Lichtleiter aufgekittet. Danach wird die Fixierung gelößt und die Formungsfolie wird auf einen Formungskörper aufgezogen, damit die Stirnfläche des Lichtleiterbündels die Form der Fokalflächhe an der gewünschten Stelle annimmt. Bei dieser Formung werden die Enden der Lichtleiter für die normalerweise benutzten Bereiche der Fokalfläche richtig ausgericht. Die so erhaltene Konfiguration wird dann fixiert und das Lichtleiterbündel in der Fokalfläche angeordnet.

Weiterhin ist vorgesehen, daß sowohl die Fassung für die Lichtleitfasern des Eintrittspalts, als auch die Fassung für die Lichtleitfasern 42, die das Spektrum aufnehmen, entlang der Fokalfläche 40 beweglich sind.

Die Kontur der Führungsbahnen für die Fassungen auf der Fokalfläche 40 ist zweckmäßigerweise asymmetrisch gewählt, damit die Fassungen formschlüssig und unverwechselbar eingesetzt werden können. Außerdem werden die Führungsbahnen nach Art von Teilkreisen codiert, um bestimmte Positionen sicher reproduzieren zu können. Diese Codierung kann mechanisch durch eine Rasterung, optisch oder elektronisch durch Magnetstreifen, ausgeführt sein

Wird die erfindungsgemäße Wellenlängenselektionsvorrichtung 10 zusammen mit einer Empfängereinheit 2 verwendet, so endet auf der Empfängerseite (nicht gezeigt), also vor den aktiven Flächen der Diodenzeilen oder Flächenarrays, das Lichtleiterbündel in einer Fassung mit gestreckter ebener Oberfläche, angepaßt an die Geometrie der Diodenanordnung.

Wie schon in der Fokalfläche wird auch hier ein formschlüssiger und unverwechselbarer Anschluß verwendet. Dazu setzt man auf den Fassungskörper der Diodenanordnung eine sogenannte "Schlüsselloch-Maske", in welche die Lichtleiterfassung als zugehöriger "Schlüssel" genau paßt, so daß der optische Kontakt ohne weiteres Streulicht optimal und reproduzierbar hergestellt ist. Auf diese Weise ist auch möglich, auf Fenster vor den Dioden zu verzichten oder zwischen den Faserenden und den Dioden weitere optische Elemente, wie beispielsweise Bildverstärker (channel plates), einzufügen.

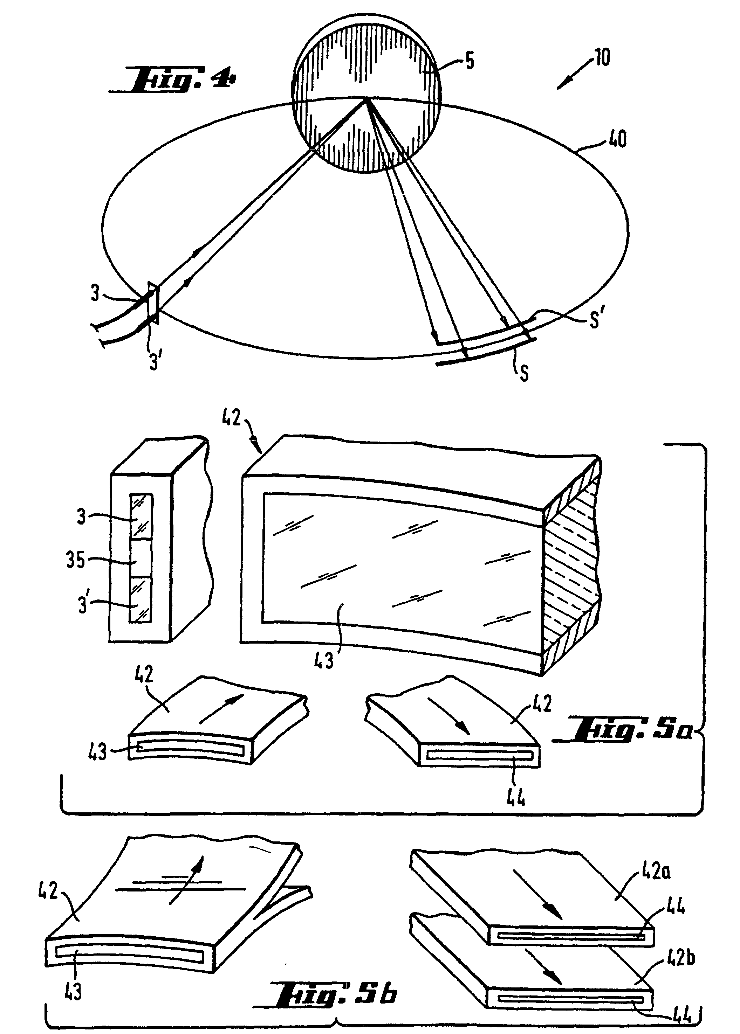

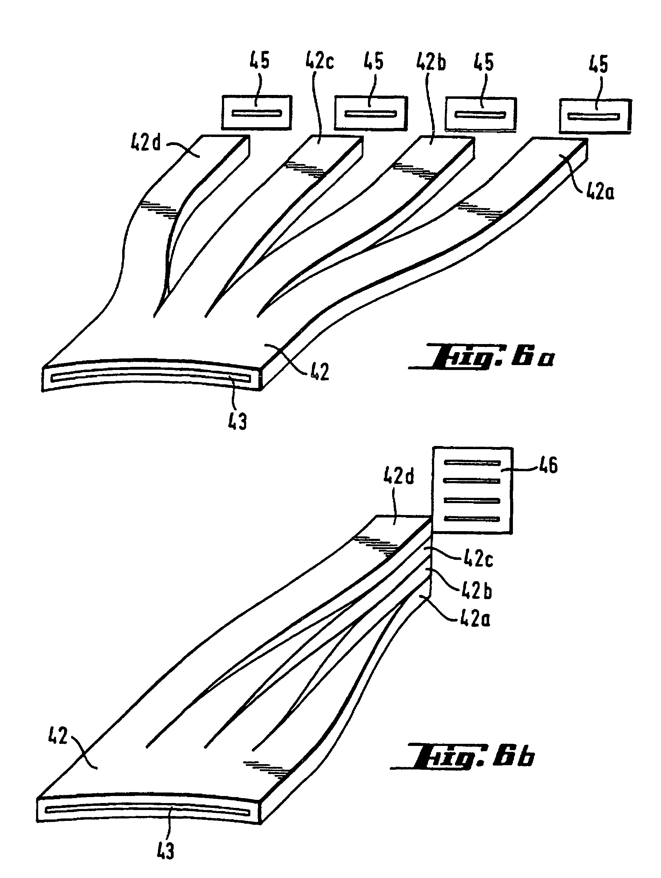

Fig. 4 zeigt eine Wellenlängenselektionsvorrichtung 10 für die Erzeugung von Zweistrahlspektren. Auf das Beugungsgitter 5 treffen zwei Strahlungsbündel, welche durch die Eintrittsspalte 3 und 3' in das Spektrometer gelangen. Die Eintrittsspalte 3 und 3' werden von der Austrittsfläche zweier übereinanderliegender, durch einen Zwischenraum 35 getrennte (siehe Fig. 5a) Lichtleiterbündel gebildet, die unabhängig voneinander von einem Meß- bzw. Vergleichsstrahlengang versorgt werden. Entsprechend entstehen auf der Spektrenseite zwei übereinanderliegende, aber voneinander unabhängige Spektrenzüge S und S' für den Meß- und den Vergleichsstrahlengang. Dabei sind wiederum die in der Fokalfläche angeordneten Enden der Lichtleiter jeweils einzeln entgegen den jeweiligen Zentralstrahlen des Eintrittspalts ausgerichtet.

Das in Fig. 5a gezeigte Lichtleiterbündel 42 nimmt beide Spektren S und S' aus Fig. 4 in der Fokalfläche mit seiner ununterbrochen (kontinuierlichen) Stirnfläche 43 auf und überträgt sie gemeinsam auf die Empfängerseite 44. Dort ist ein Flächenarray (nicht gezeigt) eingesetzt, so daß die Spektren gemeinsam aufgenommen schließlich bei der Verarbeitung durch die Rechnersoftware getrennt werden. Sind aus Gründen der höheren Empfindlichkeit auf der Empfängerseite sogenannte "Doppel-Diodenzeilen" mit zwei parallelen Systemen eingesetzt, so ist darauf zu achten, daß bei der in Fig. 5a gezeigten Lichtleiterkonfiguration der Abstand der Eintrittsspalte 3 und 3' mit dem Abstand der zwei parallel liegenden Zeilensysteme übereinstimmt.

Fig. 5b zeigt eine etwas aufwendigere, aber in der Praxis flexiblere Lösung eines horizontal aufgespaltenen Lichtleiterbündels 42a und 42b. Auch hier werden beide Spektren S und S' in der Fokalfläche mit der Stirnfläche 43 aufgenommen, dann aber räumlich getrennt zur Empfängerseite 44 transportiert. Mit dieser Konfiguration lassen sich nicht nur Abstände leichter variieren, sondern auch die Diodenzeilentypen.

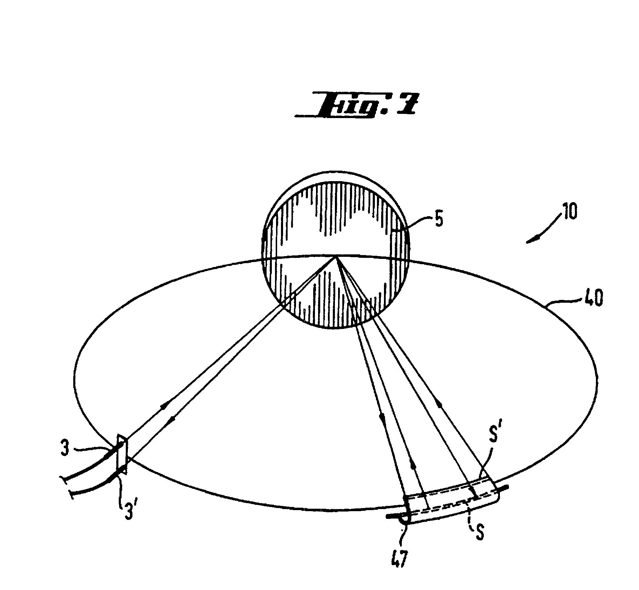

Die Fig. 6a und 6b zeigen aufgespaltene Lichtleiterbündel 42, die beliebig lange Spektrenaufnahmen zulassen. Ein Spektrum wird dabei von der Stirnfläche 43 des Lichtleiterbündels 42 in der Fokalfläche aufgenommen und streng geordnet zu den Diodenzeilen 44 oder dem Flächenarray 45 geführt. Da die Spektren länger als eine Diodenzeile 44 sein können, wird das Lichtleiterbündel in Einzelabschnitte 42a-d vertikal aufgespalten und zu verschiedenen Einzelzeilen geführt (Fig. 6a). Dies ist die einfachste, empfindlichste, aber wohl auch teuerste Lösung. In Fig. 6b werden die Einzelabschnitte 42a-d in Schichten übereinander auf ein Flächenarray geführt. Dabei ergeben sich die Vorteile eines Ein-Chip-Betriebs bezüglich der Hardware als auch der Software, einer kompakten Bauweise und einer einheitlichen Empfindlichkeit.

Es ist auf diese Weise möglich, nicht nur große Spektrenlängen mit hoher Auflösung aufzunehmen, was z. B. bei Interferogrammen sehr wertvoll ist, sondern auch über kritische Bereichsgrenzen simultan hinwegzukommen. Beispielsweise kann ein Spektralbereich von 700 bis 1500 nm simultan aufgenommen werden. Mit der erfindungsgemäßen Anordnung würde beispielsweise der Bereich von 700 bis 1100 nm mit der einen Hälfte eines Lichtleiterbündels einer SB- oder TH-Zeile der Firma RETICON zugeführt, der Abschnitt von 1100 bis 1500 nm mit der zweiten Hälfte des Lichtleiterbündels einer SI-Zeile der Firma RETICON.

Ebenso können neue, ultraviolett-empfindliche CCD-Arrays als Empfängereinheiten verwendet werden, die durch ihre extrem engen Raster eine hohe Ortsauflösung ermöglichen. Durch die Verwendung von neuen Quarzlichtleitfasern "Suprasil 300" kann nun auch Strahlung mit einer Wellenlänge bis zu 3 μm übertragen werden. Dies hat zur Folge, daß die erfindungsgemäße Anordnung mit einem Minimum von Bauelementen, die gegenseitig kompatibel sind, den gesamten Spektralbereich von 200 bis 3000 nm für die Spektrometrie erschließt. Die Spektrenabschnitte sind nach Länge und Lage beliebig wählbar. Ein Ein- und Mehrstrahlbetrieb ist mit den gleichen Bauelementen möglich. Die dynamische und die optische Auflösung ist für alle Anwendungsfälle leicht optimierbar. Das streng modulare Konzept erlaubt ein hohes Maß an Universalität bei kleinstem Aufwand.

Fig. 7 zeigt die erfindungsgemäße Wellenlängenselektionsvorrichtung für die Erzeugung von Strahlung mit genau definiertem Spektralumfang. Auf das Beugungsgitter 5 trifft ein Strahlungsbündel, welches durch den Eintrittsspalt 3 in die Wellenlängenselektionsvorrichtung 10 gelangt. Diese Strahlung wird durch das Beugungsgitter 5 spektral zerlegt und in der Fokalfläche 40 entsteht das Spektrum S. Ein vorgegebener Bereich des Spektrum S wird von den Lichtleitern 47 aufgenommen und in kurzem Bogen zu einem anderen Ort in der Fokalfläche 40 geführt. Die Konfiguration der die Strahlung abstrahlenden Enden der Lichtleiter 47 ist symmetrisch zu der die Konfiguration der die Strahlung aufnehmenden Enden der Lichtleiter 47 gewählt. Die Spiegelsymmetrieebene ist dabei in Fig. 7 durch den Kreis 40 gegeben, der gleichzeitig einen Teil der Fokalfläche bezeichnet. Die Strahlung aus der Austrittsfläche des Lichtleiterbündels strahlt zurück auf das Beugungsgitter 5 und wird - nach dem Gesetz von der Umkehrbarkeit der Strahlengänge - am Ort des Austrittsspaltes 3' wieder vereint. Am Ort des Austrittsspaltes 3' entsteht somit eine Strahlung von genau definiertem Spektralumfang und genau definierter Geometrie und Apertur. Diese Strahlung kann nun durch weitere Lichtleiter zu einer Probe geführt werden.

Es ist klar ersichtlich, daß nur Strahlung aus dem gewählten Spektralbereich zu dem Austrittsspalt gelangen kann. Durch ein Verschieben der Lichtleiter 47 auf der Fokalkurve 40 oder durch Blenden bzw. Schablonen, die vor den Lichtleitern 47 angeordnet sind, kann der Spektralbereich, der zur nachfolgenden Untersuchung der Proben verwendet werden soll, frei gewählt werden. Diese Vorrichtung 10 wirkt somit als spektrales Universalfilter, das man zwischen dem Ort des Lichtquellenbildes L' (siehe Fig. 11) und dem Aperturwandler 14 in die Strahlführung einordnen kann.

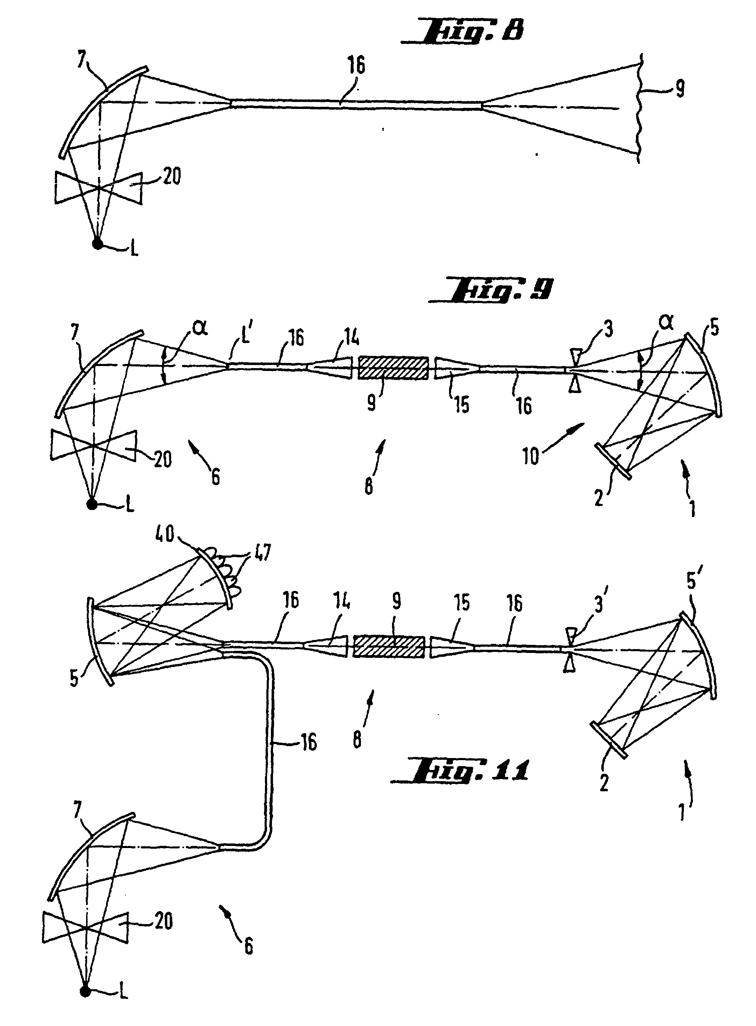

Ein optisches System für die Endoskopie wird im folgenden anhand der Fig. 8 beschrieben.

Die von einer Lichtquelle L ausgehende Strahlung wird mittels eines Ellipsoidspiegels 7 in einen Lichtleiter 16 eingestrahlt. Durch den Lichtleiter wird die Strahlung in den Bereich einer Probe 9 geführt, welche mit der Strahlung aus dem Lichtleiter 16 beleuchtet wird. Die von der Probe 9 . refektierte Strahlung wird dann von einer Abbildungseinrichtung (nicht gezeigt) aufgenommen und beispielsweise einem Betrachter zugeführt. Wird als Lichtquelle L eine Xenonentladung verwendet, beträgt die in einen Raumwinkel von 0,25 sr abgegebene Strahlstärke im Mittel 0,5 mW/nm. Dies kann von dem Spiegel 7 und dem Lichtleiter 16 auf die Probe 9 übertragen werden. Die Probe 9 ist somit extrem hell ausgeleuchtet.

Die zwischen der Lichtquelle L und dem Ellipsoidspiegel 7 angeordnete Steuervorrichtung 20 kann nun dazu verwendet werden, die Ausleuchtung der Probe 9 so einzustellen, wie es der jeweiligen Aufgabenstellung angemessen ist. Durch die Verwendung der Steuervorrichtung erhält ein Beobachter in der Endoskopie immer ein voll ausgeleuchtetes Gesichtsfeld, da die durch die Steuervorrichtung induzierten Ungleichmäßigkeiten in der Winkelverteilung der Strahlung durch die integrierende Wirkung des Lichtleiters wieder ausgeglichen werden. Mit der Betätigung der Steuervorrichtung ändert sich somit nur die Helligkeit, nicht aber das Gesichtsfeld oder die Lichtfarbe.

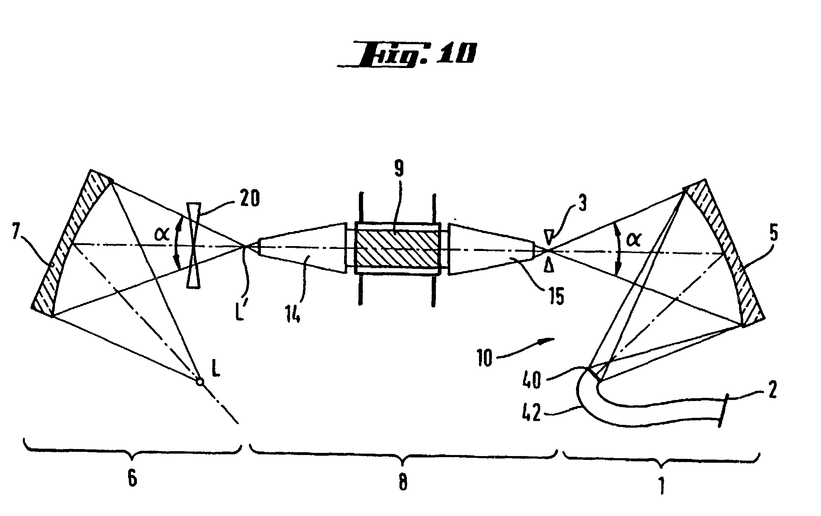

Ein optisches System für die Spektroskopie wird im folgenden anhand der Fig. 9 beschrieben.

Der zwischen dem Spektrometer 1 und der Beleuchtungseinrichtung 6 gelegene Objektraum 8 enthält eine Probe 9. Beiderseits der Probe 9 ist je ein Aperturwandler 14, 15 angebracht, der aus einem koaxialen kegelförmigen Lichtleiter oder Spiegel besteht, mit einer Lichteintritts und einer Lichtaustrittsöffnung und einer spiegelnden bzw. totalreflektierenden Innenfläche. Außerdem sind zwei Lichtleiter 16 vorgesehen, die einerseits die Strahlung von Beleuchtungseinrichtung 6 zu dem Aperturwandler 14 und andererseits die Strahlung von dem Aperturwandler 15 zu dem Spektrometer 1 führen.

Der zwischen dem Bild L', der Lichtquelle L und der Probe 9 angeordnete Aperturwandler 14 ist mit seiner die Lichteintrittsöffnung bildenden kleineren Querschnittsöffnung bzw. -fläche über ein Stück des Lichtleiters 16 in der Ebene des Bildes L' der Lichtquelle L angekoppelt, während seine die Lichtaustrittsöffnung bildende größere Querschnittsöffnung bzw. -fläche an das Eintrittsfenster der Probe 9 angekoppelt ist. Hierbei sind die Lichteintrittsöffnung und die Lichtaustrittsöffnung des Aperturwandlers vorzugsweise senkrecht zur optischen Achse verlaufende Querschnittsöffnungen. Der zwischen der Probe 9 und dem Eintrittsspalt 3 des Spektrometers 1 angeordnete Aperturwandler 15 entspricht hinsichtlich seines Aufbaus identisch dem Aperturwandler 14, wobei er, bezogen auf die Probe 9, spiegelsymmetrisch zu letzterem eingebaut ist, so daß seine von der kleineren Querschnittsöffnung bzw. -fläche gebildete Lichtaustrittsöffnung über ein Stück des Lichtleiters 16 in die Ebene des Eintrittsspalts 3 angekoppelt ist, während sich seine von der größeren Querschnittsöffnung bzw. -fläche gebildete Lichteintrittsöffnung an die Austrittsöffnung der Probe 9 gekoppelt ist.

Die Beleuchtungseinrichtung 6 umfaßt eine möglichst punktförmige Strahlungsquelle L höchstmöglicher Leuchtdichte, beispielsweise eine Xenon-Hochdruckbogenlampe. Diese wird bei konstanter Leistung betrieben. Die von der Strahlungsquelle L ausgesandte Strahlung wird von einem asphärischen Ellipsoid-Spiegel 7 in den Objektraum 8 gespiegelt. Dabei entsteht ein Bild L' der Strahlungsquelle L. Vor dem asphärischen Ellipsoid-Spiegel 7 ist eine Steuervorrichtung 20 zur Steuerung der Strahlungsintensität angeordnet, welche mit Bezug auf die Figuren 1 und 2 näher beschrieben wurde.

Hinter dem Objektraum 8 ist eine Wellenlängenselektionsvorrichtung 10 und eine Empfängereinheit 2 angeordnet. Strahlung aus dem Objektraum tritt durch den Eintrittsspalt 3 der Wellenlängenselektionsvorrichtung 10 und wird durch das holographisch erzeugte Konkavgitter 5 spektral zerlegt und auf die Empfängereinheit 2 fokussiert. Damit eine "vollständige Abbildung" erreicht wird, also die streng konjugierte Folge von Quellenblendeobjektivblende usw., besitzt der asphärische Ellipsoid-Spiegel 7 die Dimension des holographisch erzeugten Konkavgitters 5 der Wellenlängenselektionsvorrichtung 10. Insbesondere besitzen beide Elemente die gleiche Öffnung $\alpha$.

Die Empfängereinheit 2 besteht aus einer Diodenzeile, so daß das Spektrometer 1 ein Simultanspektrometer bildet.

Wird als Lichtquelle L eine Xenonentladung verwendet, so wird die Probe 9 mit einer Intensität in der Größenordnung von 1 mW/nm quasi-parallel durchstrahlt. Dies entspricht den Werten von üblichen Laborlasern. Diese Intensität liegt über den Sättigungswerten üblicher Diodenzeilen. Durch die Steuervorrichtung 20 kann die Strahlung in ihrer Intensität auf den für eine Diodenzeile optimalen Wert verringert werden, ohne daß sich die anderen Eigenschaften der Strahlung verändern. Absorbiert die Probe die Strahlung so stark, daß der lineare Dynamikbereich der Diodenzeile überschritten wird (Extinktion 2-3), so kann die Steuervorrichtung 20 entsprechend geöffnet werden, wodurch sich insgesamt ein Messbereich von etwa 6 Extinktionsstufen ergibt.

Fig. 10 zeigt eine Ausführungsform eines erfinderischen optischen Systems für die Spektroskopie.

Der zwischen dem Spektrometer 1 und der Beleuchtungseinrichtung 6 gelegene Objektraum 8 enthält eine Probe 9, die in einer Küvette aufgenommen ist. Beiderseits der Probe 9 ist je ein Aperturwandler 14, 15 angebracht, der aus einem koaxialen kegelförmigen Lichtleiter oder Spiegel besteht, mit einer Lichteintritts- und einer Lichtaustrittsöffnung und einer spiegelnden bzw. totalreflektierenden Innenfläche.

Vor dem Bild L' der Strahlungsquelle L ist eine Steuervorrichtung 20 zur Steuerung der Strahlungsintensität angeordnet.

Hinter dem Objektraum 8 ist eine erfindungsgemäße Wellenlängenselektionsvorrichtung 10 und eine Empfängereinheit 2 angeordnet. Strahlung aus dem Objektraum tritt durch den Eintrittsspalt 3 der Wellenlängenselektionsvorrichtung 10 und wird durch das holographisch erzeugte Konkavgitter 5 spektral zerlegt und auf die Fokalfläche 40 fokussiert. Damit eine "vollständige Abbildung" erreicht wird, also die streng konjugierte Folge von Quellenblendeobjektivblende usw., besitzt der asphärische Ellipsoid-Spiegel 7 die Dimension des holographisch erzeugten Konkavgitters 5 der Wellenlängenselektionsvorrichtung 10. Insbesondere besitzen beide Elemente die gleiche Öffnung $\alpha$. Die von dem Konkavgitter 5 spektral zerlegte und in die Fokalfläche fokussierte Strahlung wird von einem Bündel von Lichtleitern 42 in der Fokalfläche 40 aufgenommen und zu der Diodenzeile 2 geführt, welche als Empfängereinheit fungiert. Zusammen mit der Empfängereinheit 2 bildet somit die erfindungsgemäße Wellenlängenselektionsvorrichtung ein Spektrometer 1, insbesondere ein Simultanspektrometer.

Durch die Steuervorrichtung 20 einerseits und die Lichtleiter 42 in dem Spektrometer 1 andererseits kann die Probe über einen großen Intensitätsbereich und über einen großen Wellenlängenbereich untersucht werden, ohne daß Veränderungen im Versuchsaufbau notwendig sind.

Fig. 11 zeigt eine zweite Ausführungsform eines erfinderischen optischen Systems für die Spektroskopie.

Die in Fig. 11 gezeigte Anordnung entspricht weitgehend dem in Fig. 9 gezeigten optischen System mit der Ausnahme, daß zwischen der Beleuchtungseinrichtung 6 und dem Objektraum 8 eine erfindungsgemäße Wellenlängenselektionsvorrichtung vorgesehen ist, die in Zusammenhang mit Fig. 7 bereits beschrieben wurde. Die Verbindung von Beleuchtungseinrichtung 6 zu der Wellenlängenselektionsvorrichtung erfolgt über einen weiteren Lichtleiter 16.

Die zu der Wellenlängenselektionsvorrichtung geführte Strahlung wird durch das Beugungsgitter 5 spektral zerlegt und in der Fokalfläche 40 entsteht das Spektrum S. Ein vorgegebener Bereich des Spektrum S wird von den Lichtleitern 47 aufgenommen und in kurzem Bogen zu einem anderen Ort in der Fokalfläche 40 geführt. Die Konfiguration der die Strahlung abstrahlenden Enden der Lichtleiter 47 ist symmetrisch zu der die Konfiguration der die Strahlung aufnehmenden Enden der Lichtleiter 47 gewählt. Die Strahlung aus der Austrittsfläche des Lichtleiterbündels strahlt zurück auf das Beugungsgitter 5 und wird - nach dem Gesetz von der Umkehrbarkeit der Strahlengänge - am Ort des Austrittsspaltes wieder vereint. Am Ort des Austrittsspaltes entsteht somit eine Strahlung von genau definiertem Spektralumfang und genau definierter Geometrie und Apertur.

Die Probe 9 wird somit nur mit dem spektralen Anteil der Strahlung belastet, der für eine Messung erwünscht oder notwendig ist. Die Fig. 11 gezeigte Anordnung erlaubt außerdem auf einfachste Weise die Aufnahme von Fluoreszenz-Anregungs- und Emissionsspektren.

Optische Systeme für die Radiometrie werden im folgenden anhand der Figuren 12 bis 14 beschrieben.

Die von einer zu vermessenden Strahlungsquelle Q ausgehende Strahlung wird über einen Linsenkondensor 50 auf die Eintrittsöffnung eines Radiometers abgebildet. Das Radiometer weist dabei eine Steuervorrichtung 20, einen Hohlspiegel 52 bzw. ein Konkavgitter 53 und eine Empfängereinheit 51 auf. Die Auswahl möglicher Empfängereinheiten reicht vom Thermoelement für Absolutmessungen über Photodioden bis zu selektiven Vervielfachern.

Mit dieser Anordnung läßt sich nun eine Messung radiometrischer Größen einer Strahlungsquelle wie folgt durch führen. Zuerst wird die Empfängereinheit mit der Strahlung einer genormten Strahlungsquelle bestrahlt. Der dabei erhaltene Ausgabewert der Empfängereinheit wird dem für die genormte Strahlungsquelle bekannten Wert der zu messenden radiometrischen Größe zugeordnet. Damit wurde ein Arbeitspunkt der Empfängereinheit definiert.

Dann wird, wie Fig. 12 gezeigt, die Empfängereinheit mit der Strahlung der zu vermessenden Strahlungsquelle Q bestrahlt. Durch Einstellen der Steuervorrichtung 20 wird die Strahlung der Quelle Q solange verringert bis der Ausgabewert der Empfängereinheit mit dem Ausgabewert am Arbeitspunkt der Empfängereinheit übereinstimmt.

Ist die Steuervorrichtung 20 so eingestellt, daß der Ausgabewert der Empfängerwert mit dem bestimmten Ausgabewert am geeichten Arbeitspunkt der Empfängereinheit übereinstimmt, so läßt sich das Verhältnis von unbekannter Messgröße zu dem bekannten Normwert aus dem geometrischen Übertragungsfaktor der Steuervorrichtung bestimmen, der sich seinerseits aus der durch die Steuerelemente abgedeckten Fläche und der für den Strahlungsdurchtritt zu Verfügung stehenden Gesamtfläche des Steuerelements leicht errechnen läßt. Für den weitaus größten Teil der bei Naturwissenschaft und Technik verwendeten Strahlgeometrien gilt:

$$\text{Übertragungsfaktor = abgedeckte Fläche / Gesamtfläche.}$$

Durch das in Fig. 13 gezeigte Konkavgitter 53 läßt sich die gleiche Procedur auch selektiv für bestimmte Wellenlängen oder Wellenlängenbereiche durchführen.

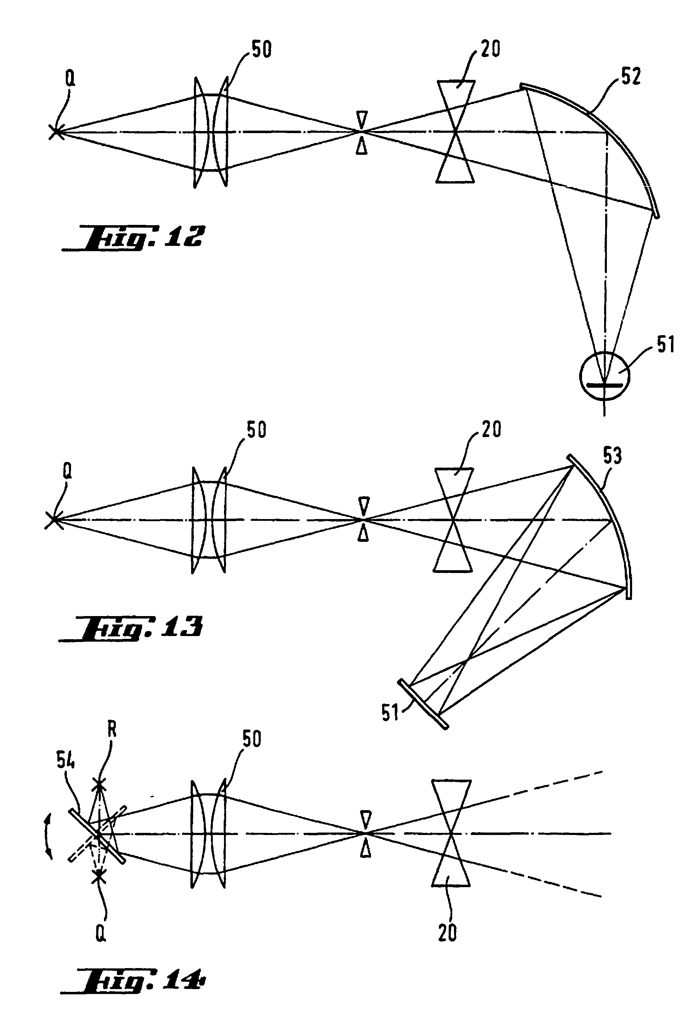

Sind, wie in Fig. 14 gezeigt, noch Umschaltmittel 54, wie ein Klappspiegel, und eine genormte Referenzquelle R vorgesehen, so kann die Bestimmung des Arbeitspunktes und die eigentliche Messung durch Betätigung des Umschaltmittels schnell und einfach mit einer Anordnung durchgeführt werden.

**Patentansprüche**

1. Wellenlängenselektionsvorrichtung (10), insbesondere für Spektroskopie-, Endoskopie- und/oder Radiometriesysteme, enthaltend wenigstens ein Dispersionselement (5) zur spektralen Aufspaltung einer durch wenigstens einen Eintrittsspalt (3) auf das Dispersionselement (5) fallenden Strahlung, wobei das Dispersionselement (5) und/oder ein Fokussierelement die spektral aufgespaltene Strahlung auf eine Fokalfläche (40) fokussiert, weiter enthaltend wenigstens ein Lichtleiterbündel aus mehreren Lichtleitern (47), das einen vorgegebenen Bereich der spektral aufgespaltenen Strahlung in der Fokalfläche (40) aufnimmt, wobei das Lichtleiterbündel eine im wesentlichen ununterbrochene Stirnfläche aufweist und bevorzugt die Stirnfläche (43) des Lichtleiterbündels an die Fokalfläche (40) angepaßt ist, **dadurch gekennzeichnet,**
**daß** die von dem Lichtleiterbündel (47) aufgenommene Strahlung so aus der Austrittsfläche des Lichtleiterbündels (47) wieder auf das Dispersionselement (5) geführt wird, daß an einem Austrittsspalt (3) der Wellenlängenselektionsvorrichtung (10) eine Strahlung erzeugt wird, die einen vorgegebenen Spektralbereich aufweist, wobei die Konfiguration der die Strahlung abstrahlenden Enden der Lichtleiter (47) symmetrisch zu der Konfiguration der die Strahlung aufnehmenden Enden der Lichtleiter (47) gewählt ist.

2. Wellenlängenselektionsvorrichtung (10) nach Anspruch 1, **dadurch gekennzeichnet, daß** die in der Fokalfläche (40) angeordneten Enden der Lichtleiter (47) des Lichtleiterbündels jeweils einzeln auf das Dispersionselement (5) oder entgegen dem Mittelpunktsstrahl des jeweiligen reellen Bildes des Eintrittsspalts (3) ausgerichtet sind.

3. Wellenlängenselektionsvorrichtung (10) nach Anspruch 1 oder 2, **dadurch gekennzeichnet, daß** mehrere Lichtleiter (42) als geordnet geführt Lichtleiterbündel vorgesehen sind.

**4.** Wellenlängenselektionsvorrichtung (10) nach Anspruch 1, **dadurch gekennzeichnet, daß** die Lichtleiter des Lichtleiterbündels (47) die in der Fokalfläche (40) aufgenommene Strahlung wieder in die Fokalfläche (40) führen und in Richtung auf das Dispersionselement (5) abstrahlen.

**5.** Wellenlängenselektionsvorrichtung (10) nach Anspruch 4, **dadurch gekennzeichnet, daß** die Lichtleiter des Lichtleiterbündels (47) die in der Fokalfläche (40) aufgenommene Strahlung so wieder in die Fokalfläche (40) führen, daß die Konfiguration der die Strahlung aufnehmenden Lichtleiterenden zu der Konfiguration der die Strahlung abstrahlenden Lichtleiterenden spiegelsymmetrisch ist.

**6.** Wellenlängenselektionsvorrichtung (10) nach einem der Ansprüche 1 bis 5, **dadurch gekennzeichnet, daß** die am Austrittsspalt erzeugte Strahlung einem Aperturwandler zuführbar ist, der einen koaxialen, kegelförmigen Lichtleiter oder Spiegel mit einer Lichteintritts- und einer Lichtaustrittsöffnung aufweist, so daß ein im wesentlichen paralleles Strahlenbündel mit einem vorgegebenen Spektralbereich erzeugbar ist.

**7.** Wellenlängenselektionsvorrichtung (10) nach einem der Ansprüche 1 bis 6, **dadurch gekennzeichnet, daß** der Lichtleiter (42; 47) in einer Fassung gehalten und entlang der Fokalfläche (40) bewegbar ist, wobei die Kontur der Führungsbahn der Fassung des Lichtleiters asymmetrisch gewählt sein kann und bevorzugt die Führungsbahn mit einer Kodierung versehen ist.

**8.** Wellenlängenselektionsvorrichtung (10) nach einem der Ansprüche 1 bis 7, **dadurch gekennzeichnet, daß** das Dispersionselement (5) ein Prisma, bevorzugt ein Féry-Prisma oder ein Beugungsgitter, bevorzugt ein Konkavgitter oder ein holographisches Beugungsgitter ist, wobei das Beugungsgitter (5) Sinus-Furchen, Rechteck-Furchen oder Sägezahn-Furchen aufweist.

**9.** Optisches System für die Spektrometrie und/oder Endoskopie, in welchem zumindest eine Probe (9) mittels von einer Strahlungsquelle (L) ausgehender Strahlung gerichtet beleuchtet und die von der Probe (9) ausgehende Strahlung zu einer Empfängereinheit (2) und/oder zu einer Abbildungseinrichtung geführt ist, **dadurch gekennzeichnet, daß** zumindest eine Wellenlängenselektionsvorrichtung (10) gemäß einem der Ansprüche 1 bis 8 vorgesehen ist.

**10.** System nach Anspruch 9, **dadurch gekennzeichnet, daß** wenigstens ein Lichtleiter (42) vorgesehen ist und der Lichtleiter (42) die aufgenommene Strahlung zur Empfängereinheit (2) führt.

**11.** System nach Anspruch 10, **dadurch gekennzeichnet, daß** die Empfängereinheit (2) wenigstens eine Photodiodenanordnung, bevorzugt eine Diodenzeile (44), aufweist.

**12.** System nach Anspruch 11, **dadurch gekennzeichnet, daß** das Lichtleiterbündel in einer Fassung mit gestreckter ebener Oberfläche, angepaßt an die Geometrie der Photodiodenanordnung, endet.

**13.** System nach Anspruch 12, **dadurch gekennzeichnet, daß** das Lichtleiterbündel aufgliedert und mehreren Diodenzeilen (44) und/oder einer Flächenanordnung (45) von Photodioden zuführbar ist.

**14.** System nach einem der Ansprüche 9 bis 13, **dadurch gekennzeichnet, daß** zur optischen Energieübertragung im Objektraum (8) zwischen der Strahlungsquelle (L) bzw. deren Bild (L') und der Probe (9) und/oder zwischen der Probe (9) und der Empfängereinheit (2) bzw. der Abbildungseinheit wenigstens ein Lichtleiter vorgesehen ist.

**15.** System nach einem der Ansprüche 9 bis 14, **dadurch gekennzeichnet, daß** zur optischen Energieübertragung im Objektraum (8) zwischen der Strahlungsquelle (L) bzw. deren Bild (L') und der Probe (9) und/oder zwischen der Probe (9) und der Empfängereinheit (2) bzw. der Abbildungseinheit ein Aperturwandler (14, 15) vorgesehen ist, der einen koaxialen, kegelförmigen Lichtleiter oder Spiegel mit einer Lichteintritts- und einer Lichtaustrittsöffnung aufweist, wobei die größere der Öffnungen jeweils der Probe (9) zugekehrt ist.

**Claims**

**1.** A wavelength selection device (10), in particular for spectroscopy, endoscopy and/or radiometry systems, comprising at least one dispersion element (5) for the spectral splitting of radiation incident through at least one entrance slit (3) onto the dispersion element (5), wherein the dispersion element (5) and/or a focusing element focuses the spectrally split radiation onto a focal surface (40), at least one optical waveguide bundle comprising several optical waveguides (42) is provided, which acquires a predetermined range of the spectrally split radiation in the focal surface (40), wherein the optical waveguide bundle comprises a substantially uninterrupted front face and the front face (43) of the optical waveguide bundle is preferably adapted to the focal surface (40) **characterized in that** the radiation acquired in the optical waveguide bundle (47) is guided from the exit surface of the optical waveguide bundle (47) again onto the dispersion element (5) so that a radiation is generated at an exit slit (3) of the wavelength selection device (10) which has a predetermined spectral range, wherein the configuration of the optical waveguide ends (47), emitting the radiation, is selected symmetrically to the configuration of the optical waveguide ends (47) acquiring the radiation.

2. A wavelength selection device (10) as claimed in claim 1, **characterized in that** the ends, disposed in the focal surface (40), of the optical waveguides (47) of the optical waveguide bundle are each individually oriented toward the dispersion element (5) or opposite to the center ray of the particular real image of the entrance slit (3).

3. A wavelength selection device (10) as claimed in claim 1 or 2, **characterized in that** several optical waveguides (42) are provided as optical waveguide bundles laid out in order.

4. A wavelength selection device (10) as claimed in claim 1, **characterized in that** the optical waveguides of the optical waveguide bundle (47) conduct the radiation acquired in the focal surface (40) again into the focal surface (40) and emit the radiation in the direction toward the dispersion element (5).

5. A wavelength selection device (10) as claimed in claim 4, **characterized in that** the optical waveguides of the optical waveguide bundle (47) conduct the radiation acquired in the focal surface (40) back into the focal surface (40) such that the configuration of the optical waveguide ends, acquiring the radiation, is mirror-symmetrical to the configuration of the optical waveguide ends emitting the radiation.

6. A wavelength selection device (10) as claimed in one of claims 1 to 5, **characterized in that** the radiation generated at the exit slit can be supplied to an aperture converter which comprises a coaxial, conical optical waveguide or mirror with a light entrance and a light exit opening such that a substantially parallel ray bundle with a predetermined spectral range can be generated.

7. A wavelength selection device (10) as claimed in claims 1 to 6, **characterized in that** the optical waveguide (42; 47) is held in a socket and is movable along the focal surface (40) wherein the contour of the guideway of the socket of the optical waveguide is asymmetrical and the guideway is preferably provided with coding.

8. A wavelength selection device (10) as claimed in one of claims 1 to 7, **characterized in that** the dispersion element (5) is a prism, preferably a Féry prism or a diffraction grid, preferably a concave grating or a holographic diffraction grid, wherein the diffraction grid (5) comprises sine rulings, rectangular rulings or sawtooth rulings.

9. An optical system for spectrometry and/or endoscopy, in which at least one sample (9) is directionally illuminated by means of radiation emitted by a radiation source (L), and the radiation emitted by the sample (9) is conducted to a receiver unit (2) and/or to an imaging arrangement, **characterized in that** at least one wavelength selection device (10) as claimed in one of claims 1 to 8 is provided.

10. A system as claimed in claim 9, **characterized in that** at least one optical waveguide (42) is provided and the optical waveguide (42) conducts the acquired radiation to the receiver unit (2).

11. A system as claimed in claim 10, **characterized in that** the receiver unit (2) comprises at least one photodiode configuration, preferably a diode row (44).

12. A system as claimed in claim 11, **characterized in that** the optical waveguide bundle terminates in a socket with elongated planar surface adapted to the geometry of the photodiode configuration.

13. A system as claimed in claim 12, **characterized in that** the optical waveguide bundle is subdivided and can be supplied to several diode rows (44) and/or an areal configuration (45) of photodiodes.

14. A system as claimed in one of claims 9 to 13, **characterized in that** for the optical energy propagation in the object space (8) between the radiation source (L) or its image (L'), respectively, and the sample (9) and/or between the sample (9) and the receiver unit (2) or the imaging unit, respectively, at least one optical waveguide is provided.

15. A system as claimed in one of claims 9 to 14, **characterized in that** for the optical energy propagation in the object space (8) between the radiation source (L) or its image (L'), respectively, and the sample (9) and/or between the sample (9) and the receiver unit (2) or the imaging unit, respectively, an aperture converter (14, 15) is provided, which comprises a coaxial conical optical waveguide or mirror with a light entrance and a light exit opening, wherein the larger of the openings in each instance faces the sample (9).

**Revendications**

1. Dispositif de sélection de longueur d'ondes (10), en particulier pour des systèmes de spectroscopie, d'endoscopie et/ou de radiométrie, comprenant au moins un élément de dispersion (5) pour le dédoublement spectral d'un rayonnement incident sur l'élément de dispersion (5) à travers au moins une fente d'entrée (3), l'élément de dispersion (5) et/ou un élément de focalisation focalisant sur une face focale (40) le rayonnement spectralement dédoublé, contenant en outre au moins un faisceau de fibres optiques constitué par plusieurs fibres optiques (47), qui reçoit dans la face focale (40) une région prédéterminée du rayonnement spectralement dédoublé, le faisceau de fibres optiques présentant une face terminale sensiblement sans interruption et de préférence, la face terminale (43) du faisceau de fibres optiques étant adaptée à la face focale (40), **caractérisé en ce que** le rayonnement reçu par le faisceau de fibres optiques (47) est guidé hors de la face de sortie du faisceau de fibres optiques (47) de nouveau sur l'élément de dispersion (5) de telle sorte qu'au niveau d'une fente de sortie (3) du dispositif de sélection de longueur d'ondes (10) est engendré un rayonnement qui présente une région spectrale prédéterminée, la configuration des extrémités des fibres optiques (47) qui émettent le rayonnement étant choisie symétrique à la configuration des extrémités des fibres optiques (47) qui reçoivent le rayonnement.

2. Dispositif de sélection de longueur d'ondes (10) selon la revendication 1, **caractérisé en ce que** les extrémités agencées dans la face focale (40), des fibres optiques (47) du faisceau de fibres optiques, sont orientées chacune individuellement sur l'élément de dispersion (5) ou à l'encontre du rayon au centre de l'image réelle respective de la fente d'entrée (3).

3. Dispositif de sélection de longueur d'ondes (10) selon la revendication 1 ou 2, **caractérisé en ce qu'**il est prévu plusieurs fibres optiques (42) en tant que faisceau de fibres optiques guidé de manière ordonnée.

4. Dispositif de sélection de longueur d'ondes (10) selon la revendication 1, **caractérisé en ce que** les fibres optiques du faisceau de fibres optiques (47) guident de nouveau dans la face focale (40) le rayonnement reçu dans la face focale (40) et le réfléchissent en direction de l'élément de dispersion (5).

5. Dispositif de sélection de longueur d'ondes (10) selon la revendication 4, **caractérisé en ce que** les fibres optiques du faisceau de fibres optiques (47) guident de nouveau dans la face focale (40) le rayonnement reçu dans la face focale (40) de telle sorte que la configuration des extrémités des fibres optiques recevant le rayonnement est symétrique à la configuration des extrémités des fibres optiques qui réfléchissent le rayonnement.

6. Dispositif de sélection de longueur d'ondes (10) selon l'une des revendications 1 à 5, **caractérisé en ce que** le rayonnement engendré au niveau de la fente de sortie peut être amené à un transformateur d'ouverture qui présente une fibre optique ou un miroir coaxial de forme conique avec un orifice d'entrée de lumière et un orifice de sortie de lumière, de sorte qu'il est possible d'engendrer un faisceau de rayonnement sensiblement parallèle avec une région spectrale prédéterminée.

7. Dispositif de sélection de longueur d'ondes (10) selon l'une des revendications 1 à 6, **caractérisé en ce que** la fibre optique (42 ; 47) est maintenue dans une monture et déplaçable le long de la face focale (40), le contour de la glissière de guidage de la monture de la fibre optique pouvant être choisi asymétrique et de préférence, la glissière de guidage étant pourvue d'un codage.

8. Dispositif de sélection de longueur d'ondes (10) selon l'une des revendications 1 à 7, **caractérisé en ce que** l'élément de dispersion (5) est un prisme, de préférence un prisme de Féry ou un réseau de diffraction, de préférence un réseau concave ou un réseau de diffraction holographique, le réseau de diffraction (5) présentant des sillons sinusoïdaux, des sillons en rectangle ou des sillons en dents de scie.

9.  Système optique pour la spectrométrie et/ou l'endoscopie, dans lequel au moins un échantillon (9) est éclairé de manière dirigée au moyen d'un rayonnement provenant d'une source de rayonnement (L) et le rayonnement provenant de l'échantillon est amené à une unité réceptrice (2) et/ou à un appareil de représentation, **caractérisé en ce qu'**il est prévu au moins un dispositif de sélection de longueur d'onde (10) selon l'une des revendications 1 à 8.

10. Système selon la revendication 9, **caractérisé en ce qu'**il est prévu au moins une fibre optique (42) et **en ce que** la fibre optique (52) mène le rayonnement reçu à l'unité réceptrice.

11. Système selon la revendication 10, **caractérisé en ce que** l'unité réceptrice (2) présente au moins un agencement de photodiodes, de préférence une rangée de diodes (44).

12. Système selon la revendication 11, **caractérisé en ce que** le faisceau de fibres optiques se termine dans une monture avec surface plane allongée, adaptée à la géométrie de l'agencement de photodiodes.

13. Système selon la revendication 12, **caractérisé en ce que** le faisceau de fibres optiques est décomposé et peut être amené à plusieurs rangées de diodes (44) et/ou à un agencement de surface (45) de photodiodes.

14. Système selon l'une des revendications 9 à 13, **caractérisé en ce que** pour la transmission d'énergie optique dans l'espace de l'objet (8) entre la source de rayonnement (L) ou son image (L'), respectivement, et l'échantillon (9) et/ou entre l'échantillon (9) et l'unité réceptrice (2) ou l'unité de reproduction, respectivement, il est prévu au moins une fibre optique.

15. Système selon l'une des revendications 9 à 14, **caractérisé en ce que** pour la transmission d'énergie optique dans l'espace de l'objet (8) entre la source de rayonnement (L) ou son image (L'), respectivement, et l'échantillon (9) et/ou entre l'échantillon (9) et l'unité réceptrice (2) ou l'unité de reproduction, respectivement, il est prévu un transformateur d'ouverture (14, 15) qui présente une fibre optique ou un miroir coaxial de forme conique avec un orifice d'entrée de lumière et un orifice de sortie de lumière, le plus grand des orifices étant respectivement tourné vers l'échantillon (9).

_Fig. 1_

_Fig. 2_

**Fig. 3**

*Fig. 4*

5

10

40

3

3'

S'

S

*Fig. 5a*

42

3

35

3'

43

42

43

42

44

*Fig. 5b*

42

43

42a

44

42b

44

Fig. 6a

Fig. 6b

Fig. 7

EP 0 815 476 B1

*Fig. 8*

*Fig. 9*

*Fig. 11*

23

Fig. 10

Fig. 12

Fig. 13

Fig. 14